# EUROPEAN PATENT APPLICATION

(11) **EP 4 675 827 A1**
(43) Date of publication of application: **07.01.2026**
(21) Application number: 24869779.9
(22) Date of filing: 27.05.2024
(51) Int. Cl.: H01M 50/502, H01M 50/533, H01M 50/176

(54) **BATTERY CELL, BATTERY, AND ELECTRIC DEVICE**

(30) Priority: 28.09.2023 CN 202322662093 U
(71) Applicant: Contemporary Amperex Technology Co., Limited, Ningde, Fujian 352100 (CN)
(72) Inventor: XIE, Yongfeng, Ningde, Fujian 352100 (CN); ZHOU, Jian, Ningde, Fujian 352100 (CN); CHENG, Qi, Ningde, Fujian 352100 (CN); WU, Ningsheng, Ningde, Fujian 352100 (CN); LI, Quankun, Ningde, Fujian 352100 (CN)
(74) Representative: Ziebig Hengelhaupt Intellectual Property Attorneys Patentanwaltskanzlei PartGmbB
(86) International application number: PCT/CN2024/095535
(87) International publication number: WO 2025/066214

(57) **Abstract**

Disclosed are a battery cell (20), a battery (100), and an electric device. The battery cell (20) includes an electrode assembly (23), a positive electrode lead-out portion (24), a positive electrode connecting assembly (25), a negative electrode lead-out portion (26), and a negative electrode connecting assembly (27); the positive electrode connecting assembly (25) is connected to a positive plate (231) and the positive electrode lead-out portion (24); the negative electrode connecting assembly (27) is electrically connected to a negative plate (232) and the negative electrode lead-out portion (26); a minimum current-carrying cross-sectional area of the positive electrode connecting assembly (25) is smaller than a current-carrying cross-sectional area of the positive electrode lead-out portion (24), a melting point of the positive electrode connecting assembly (25) is smaller than a melting point of the negative electrode connecting assembly (27), and the minimum current-carrying cross-sectional area of the positive electrode connecting assembly (25) is A₁, with a unit of mm²; the minimum current-carrying cross-sectional area of the negative electrode connecting assembly (27) is A₂, with a unit of mm²; the melting point of the positive electrode connecting assembly (25) is B₁, with a unit of °C, and the melting point of the negative electrode connecting assembly (27) is B₂, with a unit of °C; resistivity of the positive electrode connecting assembly (25) is C₁, with a unit of Ωm; and resistivity of the negative electrode connecting assembly (27) is C₂, with a unit of Ωm, A₁<A₂*(B₂/B₁)*(C₁/C₂), so that the risk of problems such as fire and explosion of the battery cell (20) is reduced, and the reliability of the battery cell (20) is improved.

## Description

### CROSS-REFERENCE TO RELATED APPLICATIONS

This application claims priority to Chinese Patent Application No. 202322662093.1, filed on September 28, 2023 and entitled "Battery Cell, Battery, and Electric Device", which is incorporated herein by reference in its entirety.

### TECHNICAL FIELD

This application relates to the technical field of batteries, and in particular, to a battery cell, a battery, and an electric device.

### BACKGROUND

Battery cells are widely used in the fields of electronic devices, means of transportation, power tools, unmanned aerial vehicles, energy storage devices, and the like. With the increasingly complex application environments and conditions, higher requirements are put forward on the reliability of the battery cell.

### SUMMARY

Embodiments of this application provide a battery cell, a battery, and an electric device, so that the reliability of the battery cell is effectively improved.

In a first aspect, an embodiment of the this application provides a battery cell, including: an electrode assembly, a positive electrode lead-out portion, a positive electrode connecting assembly, a negative electrode lead-out portion, and a negative electrode connecting assembly, where the electrode assembly includes a positive plate and a negative plate; the positive electrode connecting assembly is electrically connected to the positive plate and the positive electrode lead-out portion, and the positive electrode lead-out portion is configured to be electrically connected to an assembly outside the battery cell; the negative electrode connecting assembly is electrically connected to the negative plate and the negative electrode lead-out portion, and the negative electrode lead-out portion is configured to be electrically connected to the assembly outside the battery cell, where a minimum current-carrying cross-sectional area of the positive electrode connecting assembly is smaller than a current-carrying cross-sectional area of the positive electrode lead-out portion, a melting point of the positive electrode connecting assembly is smaller than a melting point of the negative electrode connecting assembly, and the minimum current-carrying cross-sectional area of the positive electrode connecting assembly is A₁, with a unit of mm²; the minimum current-carrying cross-sectional area of the negative electrode connecting assembly is A₂, with a unit of mm²; the melting point of the positive electrode connecting assembly is B₁, with a unit of °C, and the melting point of the negative electrode connecting assembly is B₂, with a unit of °C; resistivity of the positive electrode connecting assembly is C₁, with a unit of Ωm; and resistivity of the negative electrode connecting assembly is C₂, with a unit of Ωm, A₁<A₂*(B₂/B₁)*(C₁/C₂) being satisfied.

In the above technical solution, the melting point of the positive electrode connecting assembly is less than the melting point of the negative electrode connecting assembly, the minimum cross-sectional area A₁ of the positive electrode connecting assembly, the minimum cross-sectional area A₂ of the negative electrode connecting assembly, the melting point B₁ of the positive electrode connecting assembly, the melting point B₂ of the negative electrode connecting assembly, and the resistivity C₁ of the positive electrode connecting assembly satisfy A₁<A₂*(B₂/B₁)*(C₁/C₂), so that a fusing position occurs at the positive electrode connecting assembly when the battery cell is short-circuited, and the overall temperature of the battery cell is lower when the short-circuit path of the battery cell is fused, thereby reducing the risk of problems such as fire and explosion of the battery cell, and improving the reliability of the battery cell.

In some embodiments of the first aspect of this application, A₁≤2.5A₂.

In the above technical solution, A₁≤2.5A₂, so that the positive electrode connecting assembly has a better flow passage capability, and the positive electrode connecting assembly can be fused when the battery cell is short-circuited, thereby reducing the overall temperature of the battery cell when the short-circuit path of the battery cell is cut off, reducing the risk of problems such as fire and explosion, and improving the reliability of the battery cell.

In some embodiments of the first aspect of this application, A₁≤2.3A₂.

In the above technical solution, A₁≤2.3A₂, so that the positive electrode connecting assembly has a better current-carrying capability and meets more use requirements, and the positive electrode connecting assembly can be fused when the battery cell is short-circuited, thereby reducing the overall temperature of the battery cell when the short-circuit path of the battery cell is cut off, reducing the risk of problems such as fire and explosion, and improving the reliability of the battery cell.

In some embodiments of the first aspect of this application, A₁≤1.5A₂.

In the above technical solution, A1≤1.5A₂, so that the positive electrode connecting assembly can be fused when the battery cell is short-circuited, thereby reducing the overall temperature of the battery cell when the short-circuit path of the battery cell is cut off, and reducing the risk of problems such as fire and explosion. Thus, the battery cell has better reliability.

In some embodiments of the first aspect of this application, A₁<A₂.

In the above technical solution, A₁<A₂, and in the case where the melting point of the positive electrode connecting assembly is less than the melting point of the negative electrode connecting assembly, when the battery cell is short-circuited, fusing can occur at the positive electrode connecting assembly, thereby reducing the overall temperature of the battery cell when the short-circuit path of the battery cell is cut off, and thus reducing problems such as fire and explosion, so that the battery cell has better reliability.

In some embodiments of the first aspect of this application, a positive tab includes a plurality of positive tab portions that are stacked, the negative electrode connecting assembly includes a negative tab, the negative tab is connected to the negative plate, and the negative tab includes a plurality of negative tab portions that are stacked; and the number of the positive tabs is less than the number of the negative tabs.

In the above technical solution, the number of the positive tab portions is less than the number of the negative tab portions, which is beneficial for the negative tab to have a larger current-carrying cross-sectional area, so that the negative electrode connecting assembly is less likely to be fused.

In some embodiments of the first aspect of this application, the negative electrode connecting assembly includes a negative tab, the negative tab is connected to the negative plate, and a width of the positive tab is less than a width of the negative tab.

In the above technical solution, the width of the positive tab portions is less than the width of the negative tab portions, which is beneficial for the negative tab to have a larger current-carrying cross-sectional area, so that the negative electrode connecting assembly is less likely to be fused.

In some embodiments of the first aspect of this application, the positive electrode connecting assembly includes a positive tab, the positive tab is connected to the positive plate, and the minimum current-carrying cross-sectional area of the positive tab is smaller than the current-carrying cross-sectional area of the positive electrode lead-out portion.

In the above technical solution, the minimum current-carrying cross-sectional area of the positive tab is smaller than the current-carrying cross-sectional area of the positive electrode lead-out portion, so fusing may occur at the positive electrode connecting assembly, and fusing at the positive electrode connecting assembly when the battery cell is short-circuited can be realized by using the structure of the positive tab itself, so that the structure of the battery cell is simpler.

In some embodiments of the first aspect of this application, a rated capacity of the battery cell is W, with a unit of Ah, A₁/W≥0.15 being satisfied.

In the above technical solution, A₁/W≥0.15, so that the positive tab has a better current-carrying capability, and the temperature rise at the positive tab is relatively large, thereby reducing the risk of fusing at the negative electrode connecting assembly when the battery cell is short-circuited, and thus reducing the overall temperature of the battery cell when the short-circuit path of the battery cell is cut off, thereby reducing problems such as fire and explosion, so that the battery cell has better reliability.

In some embodiments of the first aspect of this application, the positive tab is connected to the positive electrode lead-out portion.

In the above technical solution, the positive tab is connected to the positive electrode lead-out portion, and the positive electrode connecting assembly is not provided with a positive electrode adapter, which can simplify the structure of the battery cell.

In some embodiments of the first aspect of this application, the positive electrode connecting assembly further includes a positive electrode adapter, the positive electrode adapter is connected to the positive tab and the positive electrode lead-out portion, the positive electrode adapter includes a first welding region, a second welding region, and a transition connecting portion, the first welding region is connected to the positive tab, the second welding region is connected to the positive electrode lead-out portion, the transition connecting portion is connected between the first welding region and the second welding region, and a cross-sectional area of the transition connecting portion is larger than or equal to a minimum cross-sectional area of the first welding region, and/or the cross-sectional area of the transition connecting portion is larger than or equal to a minimum cross-sectional area of the second welding region.

In the above technical solution, the positive tab is connected to the positive electrode lead-out portion by using the positive electrode adapter, so that the positive tab is electrically connected to the positive electrode lead-out portion, thereby improving the current-carrying capability of the positive electrode connecting assembly. The minimum cross-sectional area of the transition connecting portion is larger than or equal to the cross-sectional area of the first welding region, and/or the minimum cross-sectional area of the transition connecting portion is larger than or equal to the cross-sectional area of the second welding region, and the cross-sectional area of the transition connecting portion is relatively large, which can improve the current-carrying capability of the transition connecting portion, reduce the temperature rise of the positive electrode adapter, and reduce the risk of fusing of the positive electrode adapter.

In some embodiments of the first aspect of this application, the positive electrode connecting assembly further includes a positive electrode adapter and a positive tab, the positive tab is connected to the positive plate, the positive electrode adapter is connected to the positive tab and the positive electrode lead-out portion, a minimum current cross-sectional area of the positive electrode adapter is smaller than a current cross-sectional area of the positive electrode lead-out portion, and the minimum current cross-sectional area of the positive electrode adapter is smaller than a current cross-sectional area of the positive tab.

In the above technical solution, the positive tab is connected to the positive electrode lead-out portion by using the positive electrode adapter, so that the positive tab is electrically connected to the positive electrode lead-out portion, thereby improving the current-carrying capability of the positive electrode connecting assembly. The minimum current-carrying cross-sectional area of the positive electrode adapter is smaller than the current-carrying cross-sectional area of the positive electrode lead-out portion, and the minimum current-carrying cross-sectional area of the positive electrode adapter is smaller than the current-carrying cross-sectional area of the positive tab, so that when the battery cell is short-circuited, the positive electrode adapter is fused, thereby cutting off the short-circuit path, and the positive electrode connecting assembly is fused, thereby reducing the overall temperature of the battery cell when the short-circuit path of the battery cell is cut off, thereby reducing problems such as fire and explosion, so that the battery cell has better reliability.

In some embodiments of the first aspect of this application, the positive electrode connecting assembly further includes a positive electrode adapter, the positive electrode adapter is connected to the positive tab and the positive electrode lead-out portion, the positive electrode adapter includes a first welding region, a second welding region, and a transition connecting portion, the first welding region is connected to the positive tab, the second welding region is connected to the positive electrode lead-out portion, the transition connecting portion is connected between the first welding region and the second welding region, and a cross-sectional area of the transition connecting portion is larger than or equal to a minimum cross-sectional area of the first welding region, and/or the cross-sectional area of the transition connecting portion is larger than or equal to a minimum cross-sectional area of the second welding region.

In the above technical solution, the minimum cross-sectional area of the transition connecting portion is larger than or equal to the minimum cross-sectional area of the first welding region, and/or the minimum cross-sectional area of the transition connecting portion is larger than or equal to the minimum cross-sectional area of the second welding region, which is beneficial for the positive electrode adapter to have a high current-carrying capacity.

In some embodiments of the first aspect of this application, a rated capacity of the battery cell is W, with a unit of Ah, A₁/W≥0.2 being satisfied.

In the above technical solution, A₁/W≥0.2, so that the positive electrode adapter has a better current-carrying capability, and the temperature rise at the positive electrode adapter is relatively large, which reduces the risk of fusing the negative electrode connecting assembly when the battery cell is short-circuited, thereby reducing the overall temperature of the battery cell when the short-circuit path of the battery cell is cut off, and thus reducing problems such as fire and explosion, so that the battery cell has better reliability.

In some embodiments of the first aspect of this application, a thickness of at least a part of the positive electrode adapter is H₁, 1.0mm≤H₁≤1.5mm being satisfied.

In the above technical solution, the thickness H₁ of at least a part of the positive electrode adapter satisfies 1.0 mm≤H₁≤1.5 mm, which is beneficial for the positive electrode adapter to have a better current-carrying capability and improve the formation of the fast charging battery, and is also beneficial to the connection of the positive tab and the positive electrode lead-out portion with the positive electrode adapter, respectively, and is beneficial to improving the connecting stability of the positive tab and the positive electrode adapter and the connecting stability of the positive electrode lead-out portion and the positive electrode adapter.

In some embodiments of the first aspect of this application, the positive electrode adapter includes a first connecting portion and a second connecting portion, the first connecting portion is connected to the positive tab, the second connecting portion is connected to the positive electrode lead-out portion, a thickness of the first connecting portion is greater than or equal to a thickness of the second connecting portion, and the thickness of the first connecting portion is H₁, 1.0 mm≤H₁≤1.5 mm being satisfied.

In the above technical solution, the thickness of the first connecting portion is greater than the thickness of the second connecting portion, which can improve the current-carrying capability of the positive electrode adapter, and meanwhile, improve the superior welding ratio of the positive electrode lead-out portion and the positive electrode adapter.

In some embodiments of the first aspect of this application, a material of the positive tab is aluminum, and/or a material of the positive electrode adapter is aluminum.

In the above technical solution, a material of the positive tab and/or the positive electrode adapter is aluminum, which not only enables the positive connecting assembly to have a better current-carrying capability, but also enables the positive electrode adapter assembly to be easily fused, so that when the battery cell is short-circuited, fusing at the positive connecting assembly can occur, thereby reducing the overall temperature of the battery cell when the short-circuit path of the battery cell is cut off, and thus reducing problems such as fire and explosion, so that the battery cell has better reliability.

In some embodiments of the first aspect of this application, the negative electrode connecting assembly further includes a negative electrode adapter and a negative tab, the negative tab is connected to the negative plate, and the negative electrode adapter is connected to the negative tab and the negative electrode lead-out portion.

In the above technical solution, the negative tab and the negative electrode lead-out portion are connected through the negative electrode adapter, which facilitates the electrical connection between the negative tab and the negative electrode lead-out portion, and is beneficial to improving the current-carrying capability of the negative electrode connecting assembly.

In some embodiments of the first aspect of this application, a minimum cross-sectional area of the negative electrode adapter is larger than a maximum cross-sectional area of the negative tab; or, a minimum cross-sectional area of the negative tab is larger than a maximum cross-sectional area of the negative electrode adapter.

In the above technical solution, the minimum current-carrying cross-sectional area of the negative electrode adapter is larger than the maximum current-carrying cross-sectional area of the negative tab, so that the current-carrying capability of the negative electrode adapter is better, which is beneficial to forming a fast charging battery; and the minimum current-carrying cross-sectional area of the negative tab is larger than the maximum current-carrying cross-sectional area of the negative electrode adapter, which is beneficial to the negative tab having a batter current-carrying capability.

In some embodiments of the first aspect of this application, a thickness of at least a part of the positive electrode adapter is H₂, 0.6mm≤H₂≤1.0mm being satisfied.

In the above technical solution, the thickness H₂ of at least a part of the negative electrode adapter satisfies 0.6mm≤H₂≤1.0mm, which is beneficial for the negative electrode adapter to have a better current-carrying capability and improving the formation of the fast charging battery, and is also beneficial to the connection of the negative tab and the negative electrode lead-out portion with the negative electrode adapter, respectively, and is beneficial to improving the connecting stability of the negative tab and the negative electrode adapter and the connecting stability of the negative electrode lead-out portion and the negative electrode adapter.

In some embodiments of the first aspect of this application, the negative electrode adapter includes a third connecting portion and a fourth connecting portion, the third connecting portion is connected to the negative tab, the fourth connecting portion is connected to the negative electrode lead-out portion, a thickness of the third connecting portion is greater than or equal to a thickness of the fourth connecting portion, and the thickness of the third connecting portion is H₂, 0.6 mm≤H₂≤1.0 mm being satisfied.

In the above technical solution, the thickness of the third connecting portion is greater than the thickness of the fourth connecting portion, which can improve the current-carrying capability of the negative electrode adapter, and meanwhile, improve the superior welding ratio of the negative electrode lead-out portion and the negative electrode adapter.

In some embodiments of the first aspect of this application, a minimum current-carrying cross-sectional area of the positive electrode connecting assembly is less than a minimum current-carrying cross-sectional area of the negative tab.

In the above technical solution, the minimum current-carrying cross-sectional area of the positive electrode connecting assembly is smaller than the minimum current-carrying cross-sectional area of the negative tab, which facilitates fusing at the positive electrode connecting piece when the battery cell is short-circuited, thereby reducing the overall temperature of the battery cell when the short-circuit path is fused, and thus reducing problems such as fire and explosion, so that the battery cell has better reliability.

In some embodiments of the first aspect of this application, a material of the negative tab is copper, and/or a material of the negative electrode adapter is copper.

In the above technical solution, a material of the negative tab and/or the negative electrode adapter is copper, so that the negative electrode connecting assembly has a good current-carrying capability, which is beneficial to the fast charging of the battery cell.

In some embodiments of the first aspect of this application, a current-carrying cross-sectional area of the negative electrode connecting assembly is smaller than a current-carrying cross-sectional area of the negative electrode lead-out portion.

In the above technical solution, the current-carrying cross-sectional area of the negative electrode connecting assembly is smaller than the current-carrying cross-sectional area of the negative electrode lead-out portion, which is beneficial to the negative electrode lead-out portion having a high current-carrying capability, thereby improving the reliability of the battery cell.

In some embodiments of the first aspect of this application, an average charge rate of the battery cell is K, K≥2 being satisfied.

In the above technical solution, K≥2, which can realize fast charging of the battery cell.

In some embodiments of the first aspect of this application, the positive electrode connecting assembly includes a positive tab, the positive tab includes a plurality of positive tab portions that are stacked, the negative electrode connecting assembly includes a negative tab, and the negative tab includes a plurality of negative tab portions that are stacked; the electrode assembly is a wound electrode assembly, the number of the negative tab portions of the electrode assembly is M₁, the number of layers of the negative plate of the electrode assembly is M₂, 1/2≤M₁/M₂≤1 being satisfied; and/or the number of the positive tab portions of the electrode assembly is N1, and the number of layers of the positive plate of the electrode assembly is N₂, 1/2≤N₁/N₂≤1 being satisfied; and optionally, 1/2<M₁/M₂≤3/4, 1/2≤N₁/N₂≤3/4.

In the above technical solution, 1/2≤M₁/M₂≤1, and/or, 1/2≤N₁/N₂≤1, which can not only enable the positive tab and the negative tab to have a high current-carrying capability, but also help to improve the charging rate of the battery cell and form the fast charging battery, and can also reduce the space occupied by the positive tab (the positive tab is thick).

In some embodiments of the first aspect of this application, the battery cell includes two electrode assemblies.

In the above technical solution, the battery cell includes two electrode assemblies, which is beneficial for the battery cell to have a high energy density.

In some embodiments of the first aspect of this application, the negative plate includes a negative electrode active substance layer, and a specific surface area of particles of the negative electrode active substance layer is 0.5 m²/g to 5 m²/g.

In the above technical solution, the specific surface area of the particles of the negative electrode active substance layer is 0.5 m²/g to 5 m²/g, which can increase the ion intercalation sites of the negative electrode active material and improve the rate of ion intercalation into the negative active material, thereby improving the charging efficiency of the battery cell and improving the fast charging capability of the battery cell.

In some embodiments of the first aspect of this application, the negative plate includes a negative electrode active substance layer, and a volume distribution particle size DV₅₀ of the negative electrode active substance layer is ≤15 µm.

In the above technical solution, the volume distribution particle size DV₅₀ of the negative active substance layer is ≤15µm, the volume distribution particle size of the negative active material is relatively small, and the negative active material has more active reaction sites and can receive ions more quickly, thereby improving the charging efficiency of the battery cell and improving the fast charging capability of the battery cell.

In some embodiments of the first aspect of this application, the negative plate includes a negative electrode active substance layer, and a specific surface area of particles of the negative electrode active substance layer is 150 mg/1540.25 mm².

In the above technical solution, the coating weight per unit area of the negative electrode active substance layer is less than or equal to 150 mg/1540.25 mm², the coating weight per unit area of the negative electrode active substance layer is small, and the negative electrode active substance layer can have a smaller thickness, thereby reducing the resistance of ions to be intercalated into the negative electrode active substance layer during charging and improving the charging efficiency of the battery cell. The thinner negative plate can also increase the number of winding layers of the negative plate, and thus more negative tab portions can be disposed, which is beneficial to improving the negative electrode current-carrying capability and is also beneficial to the fast charging of the battery cell.

In some embodiments of the first aspect of this application, the battery cell further includes an electrolyte, and ionic conductivity of the electrolyte is 9 mS/cm to 16 mS/cm.

In the above technical solution, the ionic conductivity of the electrolyte is 9 mS/cm to 16 mS/cm, and the electrolyte has good ionic conductivity, which can reduce the impedance of the battery cell and improve the migration rate of ions, thereby improving the charging efficiency of the battery cell and improving the fast charging capability of the battery cell.

In some embodiments of the first aspect of this application, the direct current impedance of the battery cell is less than or equal to 0.4 milliohm.

In the above technical solution, the direct current impedance of the battery cell is less than or equal to 0.4 milliohm, so that the ions migrate faster between the positive plate and the negative plate, and the charging rate of the battery cell is higher, which is beneficial to forming a fast charging battery.

In a second aspect, an embodiment of this application provides a battery, including the battery cell provided in any one of the above embodiments.

In the above technical solution, the battery cell provided in any one of the above embodiments has relatively good reliability, and a battery including the battery cell also has relatively good reliability.

In some embodiments of the second aspect of this application, the battery further includes a plurality of thermal management components arranged along a first direction, the thermal management component is configured to adjust a temperature of the battery cell, the plurality of battery cells arranged along a second direction are disposed between two adjacent thermal management components, and the first direction is perpendicular to the second direction.

In the above technical solution, the arrangement direction of the thermal management components is perpendicular to the arrangement direction of the battery cells, so that one thermal management component can synchronously exchange heat with a plurality of battery cells, thereby improving temperature regulating efficiency.

In some embodiments of the second aspect of this application, each of the thermal management components is adhesively connected to an outer surface of the battery cell.

In the above technical solution, each of the thermal management components is adhesively connected to the outer surface of the battery cell, so that each of the thermal management components and the battery cell have a stable relative position relationship, which is beneficial to improving the heat exchange efficiency.

In a third aspect, an embodiment of this application further provides an electric device, including the battery cell provided in the embodiments.

In the above technical solution, the battery cell provided in any one of the above embodiments has relatively good reliability, which is beneficial to improving the electric reliability of electricity supply by using the battery cell.

### DESCRIPTION OF DRAWINGS

To describe the technical solutions in the embodiments of this application more clearly, the following briefly describes the accompanying drawings required for describing the embodiments. It should be understood that the following accompanying drawings show only some embodiments of this application, and therefore should not be considered as a limitation on the scope. A person of ordinary skill in the art may further obtain other related accompanying drawings according to these accompanying drawings without creative efforts.
FIG. 1 is a schematic structural diagram of a vehicle according to some embodiments of this application;
FIG. 2 is an exploded view of a battery according to some embodiments of this application;
FIG. 3 is an exploded view of a battery cell according to some embodiments of this application;
FIG. 4 is a schematic diagram of a cover body, a positive electrode lead-out portion, and a negative electrode lead-out portion that are assembled according to some embodiments of this application;
FIG. 5 is a cross-sectional view in a P₁ -P₁ direction in FIG. 4;
FIG. 6 is a schematic diagram of a cover body, a positive electrode lead-out portion, and a negative electrode lead-out portion that are assembled according to some other embodiments of this application;
FIG. 7 is a cross-sectional view in a P₂ -P₂ direction in FIG. 6;
FIG. 8 is a schematic diagram of an electrode assembly according to some embodiments of this application;
FIG. 9 shows another perspective of the electrode assembly according to some embodiments of this application;
FIG. 10 is a schematic diagram of an electrode assembly according to some other embodiments of this application;
FIG. 11 shows another perspective of an electrode assembly according to some other embodiments of this application;
FIG. 12 is a schematic diagram of a connection between a tab and an adapter according to some embodiments of this application;
FIG. 13 shows another perspective of a schematic view of the connection between the tab and the adapter according to some embodiments of this application;
FIG. 14 is a cross-sectional view in a P₃ -P₃ direction in FIG. 14;
FIG. 15 is a schematic diagram of the connection between the tab and the adapter according to some other embodiments of this application;
FIG. 16 is a partially enlarged view of D₁ in FIG. 15;
FIG. 17 is a partially enlarged view of D₂ in FIG. 15;
FIG. 18 is a schematic diagram of a connection between a tab and an adapter according to some additional embodiments of this application;
FIG. 19 is a schematic structural diagram of an electrode assembly according to some embodiments of this application;
FIG. 20 is a schematic structural diagram of an electrode assembly according to some other embodiments of this application; and
FIG. 21 is a schematic structural diagram of a battery cell according to some other embodiments of this application.

Reference signs: 1000, vehicle; 100, battery; 10, case body; 11, first case body; 12, second case body; 20, battery cell; 21, housing; 22, cover body; 221, pressure relief mechanism; 222, liquid injection hole; 223, sealing nail; 224, protector; 23, electrode assembly; 231, positive plate; 2311, first end surface; 232, negative plate; 2321, second end surface; 24, positive electrode lead-out portion; 241, first portion, 242, second portion; 243, third portion; 25, positive electrode connecting assembly; 251, positive tab; 2511, positive tab portion; 2512, first side surface; 2513, first arc surface; 252, positive electrode adapter; 2521, first connecting portion; 2522, second connecting portion; 252a, first welding region; 252b, second welding region; 252c, transition connecting portion; 26, negative electrode lead-out portion; 261, fourth portion; 262, fifth portion; 263, sixth portion; 27, negative electrode connecting assembly; 271, negative tab; 2711, negative tab portion; 2712, second side surface, 2713, second arc surface; 272, negative electrode adapter; 2721, third connecting portion; 2722, fourth connecting portion; 30, thermal management component; 200, controller; 300, motor; Q₁, first connecting position; Q₂, second connecting position; X₁, width direction of positive tab portion; Y₁, width direction of positive plate; Z₁, thickness direction of electrode assembly; X₂, first direction; Y₂, second direction; R₁, fusing region; E₁, straight portion; E₂, bending portion.

### DESCRIPTION OF EMBODIMENTS

To make the objectives, technical solutions, and advantages of the embodiments of this application clearer, the following clearly and completely describes the technical solutions in the embodiments of this application with reference to the accompanying drawings in the embodiments of this application. Apparently, the described embodiments are some but not all of the embodiments of this application. The assemblies in the embodiments of this application generally described and shown in the drawings herein may be arranged and designed in various different configurations.

Therefore, the following detailed description of the embodiments of this application provided in the drawings is not intended to limit the scope of this application, but merely represents selected embodiments of this application. All other embodiments obtained by a person of ordinary skill in the art based on the embodiments of this application without making creative efforts shall fall within the protection scope of this application.

It should be noted that, without contradiction, the embodiments in this application may be combined with the features in the embodiments.

It should be noted that similar reference numerals and letters represent similar items in the following drawings, and therefore, once an item is defined in one drawing, it does not need to be further defined and explained in the subsequent drawings.

In the description of the embodiments of this application, it should be understood that the orientation or positional relationship indicated the orientation or positional relationship shown in the drawings, or the orientation or positional relationship of the product of this application usually placed during use, or the orientation or positional relationship usually understood by a person skilled in the art, only to facilitate the description of this application and simplify the description, rather than indicating or implying that the referred device or element must have a specific orientation, be constructed and operated in a specific orientation, and therefore cannot be understood as a limitation to this application. In addition, the terms "first", "second", "third", and the like are used for a descriptive purpose only, but cannot be understood as indicating or implying the relative importance thereof.

At present, in view of the development of the market, the use of power batteries is becoming increasingly more widespread. Power batteries are used not only in energy storage power systems such as hydropower, thermal power, wind power, and solar power plants, but also in electric tools such as electric bicycles, electric motorcycles, and electric vehicles, as well as military equipment, aerospace, and many other fields. As an application field of power batteries continues to expand, a market demand for power batteries continues to increase.

After the battery cell is short-circuited, the temperature of the battery cell rises sharply, the short-circuited path is fused, and the temperature of the battery cell stops rising. If the short-circuited path is fused, the temperature of the battery cell is relatively low, and the risk of reliability problems such as fire and explosion of the battery cell is lower. If the fusing position is on the negative electrode side, the melting point of the material on the negative electrode side is higher, which leads to a higher temperature of the entire battery cell during fusing, and the reliability problems such as fire and explosion are likely to occur.

Based on the above considerations, in order to alleviate the reliability problem caused by the high temperature when the battery cell fused due to short circuit, the embodiment of this application provides a battery cell, including: an electrode assembly, a positive electrode lead-out portion, a positive electrode connecting assembly, a negative electrode lead-out portion, and a negative electrode connecting assembly, where the electrode assembly includes a positive plate and a negative plate; the positive electrode connecting assembly is electrically connected to the positive plate and the positive electrode lead-out portion, and the positive electrode lead-out portion is configured to be electrically connected to an assembly outside the battery cell; the negative electrode connecting assembly is electrically connected to the negative plate and the negative electrode lead-out portion, and the negative electrode lead-out portion is configured to be electrically connected to the assembly outside the battery cell, where a minimum current-carrying cross-sectional area of the positive electrode connecting assembly is smaller than a current-carrying cross-sectional area of the positive electrode lead-out portion, a melting point of the positive electrode connecting assembly is smaller than a melting point of the negative electrode connecting assembly, and the minimum current-carrying cross-sectional area of the positive electrode connecting assembly is A₁, with a unit of mm²; the minimum current-carrying cross-sectional area of the negative electrode connecting assembly is A₂, with a unit of mm²; the melting point of the positive electrode connecting assembly is B₁, with a unit of °C, and the melting point of the negative electrode connecting assembly is B₂, with a unit of °C; resistivity of the positive electrode connecting assembly is C₁, with a unit of Ωm; and resistivity of the negative electrode connecting assembly is C₂, with a unit of Ωm, A₁<A₂*(B₂/B₁)*(C₁/C₂) being satisfied.

The melting point of the positive electrode connecting assembly is less than the melting point of the negative electrode connecting assembly, the minimum cross-sectional area A₁ of the positive electrode connecting assembly, the minimum cross-sectional area A₂ of the negative electrode connection assembly, the melting point B₁ of the positive electrode connecting assembly, the melting point B₂ of the negative electrode connecting assembly, and the resistivity C₁ of the positive electrode connecting assembly satisfy A₁<A₂*(B₂/B₁)*(C₁/C₂), so that a fusing position occurs at the positive electrode connecting assembly when the battery cell is short-circuited, and the overall temperature of the battery cell is lower when the short-circuit path of the battery cell is fused, thereby reducing the risk of problems such as fire and explosion of the battery cell, and improving the reliability of the battery cell.

The battery cell disclosed in the embodiments of this application may be used without limitation in electric devices such as vehicles, ships, or aircrafts. A power supply system of the electric device with the battery cell, the battery, and the like disclosed in this application may be used. In this way, it is beneficial to improve the reliability of the battery cell.

Provided in the embodiments of this application is an electric device using a battery as a power source. The electric device may be, but is not limited to, a mobile phone, a tablet computer, a notebook computer, an electric toy, an electric tool, a battery-powered vehicle, an electric vehicle, a ship, a spacecraft, etc. The electric toy may include a stationary or mobile electric toy, such as a game machine, an electric car toy, an electric ship toy, an electric airplane toy, and the like, and the spacecraft may be an airplane, a rocket, a space shuttle, a spaceship, etc.

For ease of description, the following embodiments are described by using an example in which an electric device in an embodiment of this application is a vehicle.

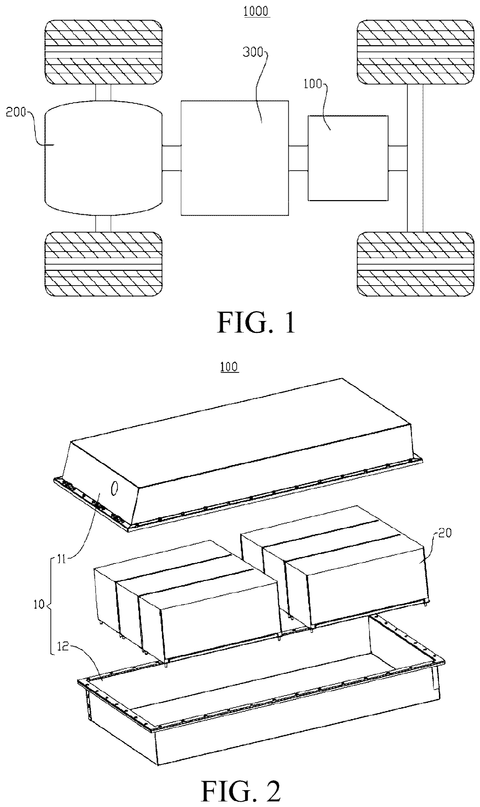

Referring to FIG. 1, FIG. 1 is a schematic diagram of a structure of a vehicle 1000 according to some embodiments of this application. The vehicle 1000 may be a fuel vehicle, a gas vehicle, or a new energy vehicle, and the new energy vehicle may be a battery electric vehicle, a hybrid vehicle, or a range-extended electric vehicle. A battery 100 is disposed inside the vehicle 1000. The battery 100 may be disposed at the bottom of the vehicle 1000, may be disposed at the head of the vehicle 1000, or may be disposed at the tail of the vehicle 1000. The battery 100 may be used to supply power to the vehicle 1000. For example, the battery 100 may be used as an operating power source or a use power source of the vehicle 1000. The vehicle 1000 may further include a controller 200 and a motor 300, and the controller 200 is used to control the battery 100 to power the motor 300, for example, for a working power requirement for the vehicle 1000 during starting, navigating, and driving the vehicle.

In some embodiments of this application, the battery 100 may be used not only as the operating power source or the use power source of the vehicle 1000, but also as a driving power source of the vehicle 1000, instead of or partially instead of fuel or natural gas to provide driving power for the vehicle 1000.

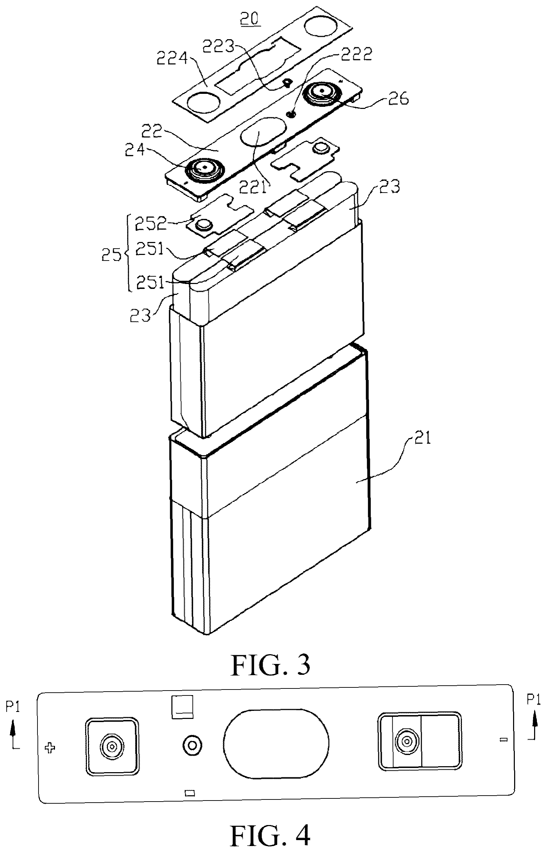

Referring to FIG. 2 and FIG. 3, FIG. 2 is an exploded diagram of a structure of a battery 100 according to some embodiments of this application, and FIG. 3 is a schematic diagram of a structure of a battery cell 20 according to some embodiments of this application. The battery 100 includes a case body 10 and a battery cell 20. The battery cell 20 is configured to be accommodated in the case body 10.

Here, the case body 10 is used for providing assembly space for the battery cell 20, and the case body 10 may have various structures. In some embodiments, the case body 10 may include a first case body 11 and a second case body 12, the first case body 11 and the second case body 12 cover each other, and the first case body 11 and the second case body 12 jointly define the assembly space for accommodating the battery cell 20. The second case body 12 may be of a hollow structure with an opening at one end, the first case body 11 may be of a plate-shaped structure, and the first case body 11 covers an opening side of the second case body 12, so that the first case body 11 and the second case body 12 jointly define the assembly space. Alternatively, the first case body 11 and the second case body 12 each may be of a hollow structure with an opening at one side, and an opening side of the first case body 11 covers an opening side of the second case body 12.

Of course, the case body 10 formed by the first case body 11 and the second case body 12 may be in various shapes such as a cylinder, a rectangular cuboid, a cube, and the like. For example, in FIG. 2, the shape of the case body 10 is a cuboid.

In the battery 100, there may be one or a plurality of battery cells 20 disposed in the case body 10. When a plurality of battery cells 20 are arranged in the case body 10, the plurality of battery cells 20 may be subjected to series connection, parallel connection, or series-parallel connection, and the series-parallel connection means that the plurality of battery cells 20 are subjected to both series connection, and parallel connection. The plurality of battery cells 20 may be subjected to series connection, parallel connection, or series-parallel connection directly, and then an integration formed by the plurality of battery cells 20 is accommodated in the case body 10. Certainly, the battery 100 may be alternatively a battery module formed by integrating the plurality of battery cells 20 by series connection, parallel connection, or series-parallel connection, and then a plurality of battery modules are integrated by series connection, parallel connection, or series-parallel connection, and accommodated in the case body 10.

In some embodiments, the battery 100 may further include another structure. For example, the battery 100 may further include a current converging component, and the current converging component is configured to connect the plurality of battery cells 20, to implement electrical connections between the plurality of battery cells 20.

In the embodiments of this application, the battery cell 20 may be a secondary battery, and the secondary battery refers to a battery cell that may be continuously used by activating an active material by charging the battery cell 20 after discharging thereof.

The battery cell 20 may be a lithium ion battery, a sodium ion battery, a sodium-lithium ion battery, a lithium metal battery, a sodium metal battery, a lithium-sulfur battery, a magnesium ion battery, a nickel-hydrogen battery, a nickel-cadmium battery, a lead-acid battery, or the like, which is not limited in the embodiments of this application.

The battery cell 20 may be in a shape of a cylinder, a prism, or other shapes. Exemplarily, in FIG. 3, the battery cell 20 is of a structure of a square battery.

As shown in FIG. 3, in some embodiments, the battery cell 20 further includes a housing 21 and a cover body 22, an accommodating space is formed on the housing 21, and the electrode assembly 23 is accommodated in the housing 21. An opening is formed in one end of the accommodating space, and the electrode assembly 23 enters the housing 21 from the opening end of the housing 21. The cover body 22 covers the opening. A shape of the cover body 22 may be adapted to a shape of the housing 21 to match the housing 21. Optionally, the cover body 22 may be made of a material with specified hardness and strength (for example, an aluminum alloy), so that the cover body 22 is less likely to deform when subjected to extrusion and collision, enabling the battery cell 20 to have higher structural strength and improved safety performance. The cover body 22 may be provided with functional components such as an electrode lead-out portion. The electrode lead-out portion may be configured to be electrically connected to the electrode assembly 23 for outputting or inputting electric energy of the battery cell 20. In some embodiments, a first pressure relief mechanism 221 for relieving an internal pressure may be further disposed on the cover body 22 when the internal pressure or temperature of the battery cell 20 reaches a threshold. The cover body 22 may be made of various materials, for example, copper, iron, aluminum, stainless steel, an aluminum alloy, a plastic, etc. In some embodiments, an insulating member may further be disposed on an inner side of the cover body 22, and the insulating member may be configured to isolate an electric connecting component in the housing 21 from the end cap to reduce the risk of a short circuit. For example, the insulation member may be plastic, rubber, etc.

The cover body 22 may be further provided with a liquid injection hole 222 and a sealing nail 223, and the liquid injection hole 222 is configured to inject an electrolyte into the battery cell 20. The sealing pin 223 is configured to seal the liquid injection hole 222.

A protective member 224 may be further disposed on a surface of the cover body 22 away from the housing 21, and a cladding member covers the surface of the cover body 22 away from the housing 21 to perform functions such as heat insulation and insulation.

The housing 21 is an assembly configured to cooperate with the cover body 22 to form an internal environment of the battery cell 20, where the formed internal environment may be configured to accommodate the electrode assembly 23, an electrolyte, and other components. The housing 21 and the end cap may be independent components, and an opening may be provided in the housing 21, and the inner environment of the battery cell 20 may be formed by closing the cover body 22 at the opening. Without limitation, the cover body 22 and the housing 21 may also be integrated. Specifically, the cover body 22 and the housing 21 may form a joint connection surface before other components are fitted into the housing, and then the cover body 22 is enabled to cover the housing 21 when an interior of the housing 21 needs to be enclosed. The housing 21 may be in various shapes and various dimensions, such as cuboid, cylinder, hexagonal prism, and the like. Specifically, the shape of the housing 21 may be determined based on a specific shape and dimension of the electrode assembly 23. The housing 21 may be made of various materials, for example, copper, iron, aluminum, stainless steel, an aluminum alloy, a plastic, etc.

As shown in FIG. 3, in some embodiments, the battery cell 20 includes an electrode assembly 23, a positive electrode lead-out portion 24, a positive electrode connecting assembly 25, a negative electrode lead-out portion 26, and a negative electrode connecting assembly 27, where the electrode assembly 23 includes a positive plate 231 and a negative plate 232; the positive electrode connecting assembly 25 is electrically connected to the positive plate 231 and the positive electrode lead-out portion 24, and the positive electrode lead-out portion 24 is configured to be electrically connected to a component outside the battery cell 20; the negative electrode connecting assembly 27 is electrically connected to the negative plate 232 and the negative electrode lead-out portion 26, and the negative electrode lead-out portion 26 is configured to be electrically connected to the component outside the battery cell 20, where a minimum current-carrying cross-sectional area of the positive electrode connecting assembly 25 is smaller than a current-carrying cross-sectional area of the positive electrode lead-out portion 24, a melting point of the positive electrode connecting assembly 25 is smaller than a melting point of the negative electrode connecting assembly 27, and the minimum current-carrying cross-sectional area of the positive electrode connecting assembly 25 is A₁, with a unit of mm²; the minimum current-carrying cross-sectional area of the negative electrode connecting assembly 27 is A₂, with a unit of mm²; the melting point of the positive electrode connecting assembly 25 is B₁, with a unit of °C, and the melting point of the negative electrode connecting assembly 27 is B₂, with a unit of °C; resistivity of the positive electrode connecting assembly 25 is C₁, with a unit of Ωm; and resistivity of the negative electrode connecting assembly 27 is C₂, with a unit of Ωm, A₁<A₂*(B₂/B₁)*(C₁/C₂) being satisfied.

The electrode assembly 23 includes a positive electrode, a negative electrode, and a spacer. During charge and discharge of the battery cell 20, intercalation/de-intercalation of active ions (e.g., lithium ions) are enabled at the positive electrode and negative electrode by moving the active ions between the positive electrode and negative electrode. The spacer is provided between the positive electrode and the negative electrode to prevent the positive and negative electrodes from being short-circuited and to allow active ions to pass therethrough.

The positive plate 231 includes a positive current collector and a positive electrode active material disposed on at least one surface of the positive current collector.

As an example, the positive current collector has two surfaces opposite in its own thickness direction, and the positive active material is provided on either one or both of the two opposite surfaces of the positive current collector.

As an example, for the positive current collector, a metal foil or a composite current collector may be employed. For example, as the metal foil, aluminum or stainless steel which is subjected to surface treatment by silver, stainless steel, copper, aluminum, nickel, a carbon electrode, carbon, nickel, titanium, or the like can be used. The composite current collector may include a high-molecular material base layer and a metal layer. The composite current collector may be formed by forming a metal material (aluminum, an aluminum alloy, nickel, a nickel alloy, titanium, a titanium alloy, silver, a silver alloy, or the like) on a substrate of a high-molecular material (a substrate of polypropylene, polyethylene terephthalate, polybutylene terephthalate, polystyrene, polyethylene, or the like).

As an example, the positive active material may include at least one of a lithium-containing phosphate, a lithium-transition metal oxide, and respective modified compounds thereof. However, this application is not limited to these materials, and other conventional materials that can be used as a positive electrode active material of a battery 100 may also be used. These positive electrode active materials may be used alone or in combination of two or more thereof. Here, examples of the lithium-containing phosphate may include, but are not limited to, at least one of lithium iron phosphate (e.g., LiFePO₄, also referred to as LFP), a composite material of lithium iron phosphate and carbon, lithium manganese phosphate (e.g., LiMnPO₄), a composite material of lithium manganese phosphate and carbon, lithium ferro-manganese phosphate, and a composite material of lithium ferro-manganese phosphate and carbon. Examples of the lithium transition metal oxide may include, but are not limited to, at least one of lithium cobalt oxide (e.g., LiCoO₂), lithium nickel oxide (for example, LiNiO₂), lithium manganese oxide (e.g., LiMnO₂ or LiMn₂O₄), lithium nickel cobalt oxide, lithium manganese cobalt oxide, lithium nickel manganese oxide, lithium nickel cobalt manganese oxide (e.g., LiNi₁/3Co₁/3Mn₁/3O₂ (also simply referred to as NCM₃33), LiNi_{0.5}Co_{0.2}Mn_{0.3}O₂ (also simply referred to as NCM₅23), LiNi_{0.5}Co_{0.25}Mn_{0.25}O₂ (also simply referred to as NCM₂11), LiNi_{0.6}Co_{0.2}Mn_{0.2}O₂ (also simply referred to as NCM₆22), LiNi_{0.8}Co_{0.1}Mn_{0.1}O₂ (also simply referred to as NCM₈11)), lithium nickel cobalt aluminum oxide (e.g., LiNi_{0.85}Co_{0.15}Al_{0.05}O₂), modifying compounds thereof, and the like.

In some embodiments, the negative plate 232 may include only a negative current collector.

As an example, for the negative current collector, a metal foil, a foamed metal, or a composite current collector may be employed. For example, as the metal foil, aluminum or stainless steel which is subjected to surface treatment by silver, stainless steel, copper, aluminum, nickel, carbon electrode, carbon, nickel, titanium, or the like may be employed. The foamed metal may be foamed nickel, foamed copper, foamed aluminum, foamed alloy, foamed carbon, or the like. The composite current collector may include a high-molecular material base layer and a metal layer. The composite current collector may be formed by forming a metal material (copper, a copper alloy, nickel, a nickel alloy, titanium, a titanium alloy, silver, a silver alloy, or the like) on a substrate of a high-molecular material (a substrate of polypropylene, polyethylene terephthalate, polybutylene terephthalate, polystyrene, polyethylene, or the like).

As an example, the negative plate 232 may include a negative current collector and a negative active material disposed on at least one surface of the negative current collector.

As an example, the negative current collector has two surfaces opposite in its own thickness direction, and the negative active material is provided on either one or both of the two opposite surfaces of the negative current collector.

As an example, the negative active material may be a negative active material which is known in the art for a battery cell 20. As an example, the negative electrode active material may include at least one of the following materials: synthetic graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, this application is not limited to these materials, and another conventional material that can be used as a negative electrode active material of a battery 100 may also be used. These negative electrode active materials may be used alone or in combination of two or more thereof.

In some embodiments, the material of the positive current collector may be aluminum and the material of the negative current collector may be copper.

The spacer may be a separator, and a material of the separator may include at least one of a glass fiber, a non-woven fabric, polyethylene, polypropylene, and polyvinylidene fluoride. The separator may be a single-layer film or a multilayer composite film. When the separator is a multilayer composite film, the materials of respective layers may be the same or different. The spacer may be a single component located between the positive electrode and negative electrode, or may be attached to the surfaces of the positive electrode and negative electrode.

The positive electrode connecting assembly 25 is a conductive structure located in the housing 21 and electrically connected to the positive plate 231 and the positive electrode lead-out portion 24. The positive electrode lead-out portion 24 is electrically connected to the positive plate 231 through the positive electrode connecting assembly 25. The positive electrode lead-out portion 24 may be disposed on the cover body 22, and the positive electrode lead-out portion 24 disposed on the cover body 22 may also be referred to as a positive electrode terminal or a positive electrode pole. The positive electrode lead-out portion 24 and the cover body 22 may be connected by welding, riveting, or other components. The material of the positive electrode lead-out portion 24 includes, but is not limited to, aluminum, copper, and the like.

In some embodiments, the housing 21 may serve as the positive electrode lead-out portion 24, that is, the positive plate 231 is electrically connected to the housing 21 through the positive electrode connecting assembly 25. The positive electrode connecting assembly 25 may be made of the same material or may be made of a plurality of different materials.

The negative electrode connecting assembly 27 is a conductive structure located in the housing 21 and electrically connected to the negative plate 232 and the negative electrode lead-out portion 26. The negative electrode lead-out portion 26 is electrically connected to the negative plate 232 through the negative electrode connecting assembly 27. The negative electrode lead-out portion 26 may be disposed on the cover body 22, and the negative electrode lead-out portion 26 disposed on the cover body 22 may be referred to as a negative electrode terminal or a negative electrode pole. The negative electrode lead-out portion 26 and the cover body 22 may be connected by welding, riveting, or the like. The material of the negative electrode lead-out portion 26 includes, but is not limited to, aluminum, copper, and the like.

In some embodiments, the housing 21 may serve as the negative electrode lead-out portion 26, that is, the negative plate 232 is electrically connected to the housing 21 through the negative electrode connecting assembly 27. In an embodiment in which the housing 21 serves as the positive electrode lead-out portion 24, the negative electrode lead-out portion 26 may be disposed on the cover body 22. In an embodiment in which the housing 21 serves as the negative electrode lead-out portion 26, the positive electrode lead-out portion 24 may be disposed on the cover body 22. Exemplarily, in an embodiment in which the battery cell 20 is a cylindrical battery 100, the housing 21 may serve as the negative electrode lead-out portion 26, and the positive electrode lead-out portion 24 is disposed on the cover body 22.

Of course, both the positive electrode lead-out portion 24 and the negative electrode lead-out portion 26 may be disposed on the cover body 22 (shown in FIG. 3). Exemplarily, in an embodiment in which the battery cell 20 is a square shell battery 100, both the positive electrode lead-out portion 24 and the negative electrode lead-out portion 26 are disposed on the cover body 22.

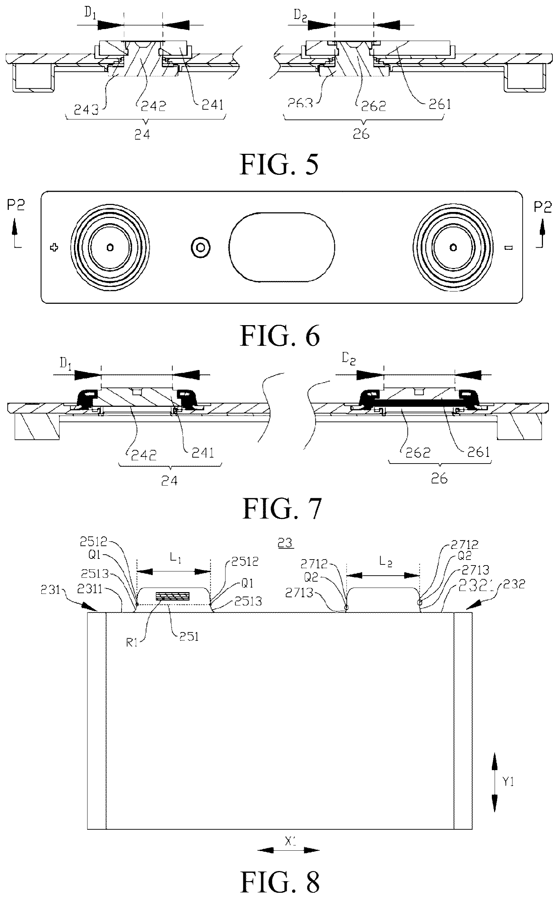

In an embodiment in which the positive electrode lead-out portion 24 is disposed on the cover body 22, a part of the positive electrode lead-out portion 24 may extend into the housing 21, a part of the positive electrode lead-out portion may extend to the side of the cover body 22 away from the housing 21, and a part of the positive electrode lead-out portion may be disposed in a through hole of the cover body 22 in a penetrating manner. The minimum diameter of the positive electrode lead-out portion 24 is D₁, with a unit of mm, and the current-carrying cross section of the positive electrode lead-out portion 24 is =π*(D₁/2)2. Exemplarily, as shown in FIG. 4 and FIG. 5, the positive electrode lead-out portion 24 is riveted to the cover body 22, the positive electrode lead-out portion 24 includes a first portion 241, a second portion 242, and a third portion 243, the first portion 241 and the third portion 243 are respectively connected to two ends of the second portion 242, the first portion 241 and the third portion 243 are respectively located on two sides of the cover body 22 in the thickness direction, the first portion 241 is located on the side of the cover body 22 away from the housing 21, and the third portion 243 is located on the side of the cover body 22 facing the housing 21. The first portion 241 is of a rectangular structure, the second portion 242 is of a cylindrical structure, and the third portion 243 may be of a cylindrical or rectangular structure. The cross-sectional area of the first portion 241 is larger than the cross-sectional area of the second portion 242, and the cross-sectional area of the third portion 243 is larger than the cross-sectional area of the second portion 242. The second portion 242 is a portion of the positive electrode lead-out portion 24 with the smallest cross-sectional area. Taking the second portion 242 being cylindrical as an example, the diameter of the second portion 242 is the minimum diameter D₁ of the positive lead-out portion 24, with a unit of mm, and the cross-sectional area of the second portion 242 is the current-carrying cross-section of the positive lead-out portion 24, that is, the cross-sectional area of the second portion 242 is =π*(D₁/2)2.

As shown in FIG. 6 and FIG. 7, the positive electrode lead-out portion 24 is connected to the cover body 22, the positive electrode lead-out portion 24 includes a first portion 241 and a second portion 242, the first portion 241 is connected to one end of the second portion 242, and the first portion 241 is located on the side of the cover body 22 away from the housing 21. The first portion 241 and the second portion 242 are both of cylindrical structures. The minimum diameter of the positive electrode lead-out portion 24 is located at the end of the first portion 241 away from the second portion 242.

The negative electrode connecting assembly 27 may be made of the same material or may be made of a plurality of different materials.

The components that are electrically connected to the positive lead-out portion 24 and the negative lead-out portion 26 outside the battery cell 20 include, but are not limited to, a busbar component and an electrical connection interface of an electrical device. The busbar component may realize an electrical connection among the plurality of battery cells 20. The electric connecting interface of the electric device may supply electricity to the electric device after being electrically connected to the positive electrode lead-out portion 24 and the negative electrode lead-out portion 26.

The fusing region R₁ is a fusing region of the positive electrode connecting assembly 25 when the battery cell 20 is short-circuited and the temperature rises to a certain value. The fusing region R₁ may be a position where the current-carrying cross-sectional area of the positive electrode connecting assembly 25 is the smallest.

The melting point is the temperature at which a solid changes its state of matter (melts) from a solid to a liquid. That is, B₁ is the temperature at which the positive electrode connecting assembly 25 is melted from solid to liquid, and B₂ is the temperature at which the negative electrode connecting assembly 27 is melted from solid to liquid.

The resistivity can represent the resistance characteristics of the positive electrode connecting assembly 25 and the negative electrode connecting component 27. In case of B₁<B₂, A₁<A₂*(B₂/B₁)*(C₁/C₂), so that the fusing point is at the positive electrode connecting component 25. Exemplarily, when the material of the positive electrode connecting assembly 25 is aluminum and the material of the negative electrode connecting assembly 27 is copper, B₁=660, B₂=1083, C₁=2.83*(10^-8), C₂=1.75*(10^-8), A₁=44.8, A₂=20.8, A₂*(B₂/B₁)*(C₁/C₂)=55.19, A₁<A₂*(B₂/B₁)*(C₁/C₂) being satisfied.

When the material of the positive electrode connecting assembly 25 is aluminum and the material of the negative electrode connecting assembly 27 is nickel, B₁=660, B₂=1452, C₁=2.83*(10^-8), C₂=6.84*(10^-8), A₁=12, A₂=14, A₂*(B₂/B₁)*(C₁/C₂= 12.74, A₁<A₂*(B₂/B₁)*(C₁/C₂) being satisfied.

The melting point of the positive electrode connecting assembly 25 is less than the melting point of the negative electrode connecting assembly 27, the minimum cross-sectional area A₁ of the positive electrode connecting assembly, the minimum cross-sectional area A₂ of the negative electrode connecting assembly 27, the melting point B₁ of the positive electrode connecting assembly 25, the melting point B₂ of the negative electrode connecting assembly 27, and the resistivity C₁ of the positive electrode connecting assembly 25 satisfy A₁<A₂*(B₂/B₁)*(C₁/C₂), so that a fusing position occurs at the positive electrode connecting assembly 25 when the battery cell 20 is short-circuited, and the overall temperature of the battery cell 20 is lower when the short-circuit path of the battery cell 20 is fused, thereby reducing the risk of problems such as fire and explosion of the battery cell 20, and improving the reliability of the battery cell 20.

(B₂/B₁)*(C₁/C₂) may be greater than 1, less than 1, or equal to 1. Since the melting point B₁ of the positive electrode connecting assembly 25 is < the melting point B₂ of the negative electrode connecting assembly 27, in the case of (B₂/B₁)*(C₁/C₂)≥1, when the battery cell 20 is short-circuited, the fusing may occur at the positive electrode connecting assembly 25, and the positive electrode connecting assembly 25 may also have a large current-carrying capability, which is beneficial to fast charging.

In some embodiments, A₁≤2.5A₂.

For example, A₁ may be equal to 0.3A₂, 0.5A₂, 0.7A₂, A₂, 1.2A₂, 1.7A₂, 1.9A₂, 2A₂, 2.5A₂, or the like.

A₁≤2.5A₂, so that the positive electrode connecting assembly 25 has a better current-carrying capability, and fusing may occur at the positive electrode connecting assembly 25 when the battery cell 20 is short-circuited, thereby reducing the overall temperature of the battery cell 20 when the short-circuit path of the battery cell 20 is cut off, reducing the risk of problems such as fire and explosion, and improving the reliability of the battery cell 20.

In some embodiments, A₁≤2.3A₂.

For example, A₁ may be equal to 0.1A₂, 0.3A₂, 0.9A₂, 1.3A₂, 1.7A₂, 1.8A₂, 2.1A₂, 2.2A₂, or the like.

A1≤2.3A₂, so that the positive electrode connecting assembly 25 has a better current-carrying capability and meets more use requirements, and fusing may occur at the positive electrode connecting assembly 25 when the battery cell 20 is short-circuited, thereby reducing the overall temperature of the battery cell 20 when the short-circuit path of the battery cell 20 is cut off, reducing the risk of problems such as fire and explosion, and improving the reliability of the battery cell 20.

In some embodiments, A₁≤1.5A₂.

For example, A₁ may be equal to 0.2A₂, 0.4A₂, 0.6A₂, 1.1A₂, 1.2A₂, 1.4A₂, 1.5A₂, or the like.

A ₁≤1.5A₂, so that when the battery cell 20 is short-circuited, fusing can occur at the positive electrode connecting assembly 25, thereby reducing the overall temperature of the battery cell 20 when the short-circuit path of the battery cell 20 is cut off, thereby reducing problems such as fire and explosion, so that the battery cell 20 has better reliability.

In some embodiments, A₁<A₂.

For example, A₁ may be equal to 0.15A₂, 0.25A₂, 0.35A₂, 0.45A₂, 0.55A₂, 0.65A₂, 0.75A₂, 0.85A₂, or the like.

A₁<A₂, and in the case where the melting point of the fusing region is less than the melting point of the negative electrode connecting assembly 27, when the battery cell 20 is short-circuited, fusing can occur at the positive electrode connection assembly 25, thereby reducing the overall temperature of the battery cell 20 when the short-circuit path of the battery cell 20 is cut off, thereby reducing problems such as fire and explosion, so that the battery cell 20 has better reliability.

In some embodiments, the positive tab 251 includes a plurality of positive tab portions 2511 that are arranged in a stacked manner, the negative connecting assembly 27 includes a negative tab 271, the negative tab 271 is connected to the negative plate 232, the negative tab 271 includes a plurality of negative tab portions 2711 that are arranged in a stacked manner, and the number of the positive tab portions 2511 is less than the number of the negative tab portions 2711.

"plurality" refers to two or more.

The plurality of positive tab portions 2511 are stacked to integrally form the positive tab 251, and the plurality of negative tab portions 2711 are stacked to integrally form the negative tab 271. Each of the negative tab portions 2711 and the negative current collector of the negative plate 232 may be integrally formed. Each of the negative tab portions 2711 and the positive current collector of the negative plate 232 may also be separately disposed and connected as a whole by welding connection, conductive adhesive connection, or the like. The thickness of the positive electrode portion and the thickness of the negative tab portion 2711 may be the same or different.

If the number of the positive tab portions 2511 is less than the number of the negative tab portions 271, the thickness of the positive tab 251 formed by stacking the plurality of positive tab portions 2511 may be less than the thickness of the negative tab 271 formed by stacking the plurality of negative tab portions 2711.

The number of the positive tab portions 2511 is less than the number of the negative tab portions 2711, which is beneficial for the negative tab 271 to have a larger current-carrying cross-sectional area, so that the negative electrode connecting assembly 27 is less likely to be fused.

For another example, in some embodiments, the negative electrode connecting assembly 27 includes a negative tab 271, the negative tab 271 is connected to the negative plate 232, and a width of the positive tab 251 is less than a width of the negative tab 271.

In an embodiment in which the negative tab 271 includes a plurality of negative tab portions 2711 that are stacked, and the negative tab portion 2711 and the negative current collector of the negative plate 232 are integrally formed, the negative tab portion 2711 has two second side surfaces 2712 that are arranged opposite to each other along the width direction of the negative tab portion 2711. Along the width direction of the negative plate 232, the negative current collector of the negative plate 232 has a second end surface 2321, and the second end surface 2321 is connected to each second side surface 2712 through a second cambered surface 2713. The second arc surface 2713 is connected to the second side surface 2712 at a second connecting position Q₂. The width direction of the negative tag portion 2711 is parallel to the width direction X₁ of the positive tab portion. The width direction of the negative plate 232 is parallel to the width direction Y₁ of the positive plate.

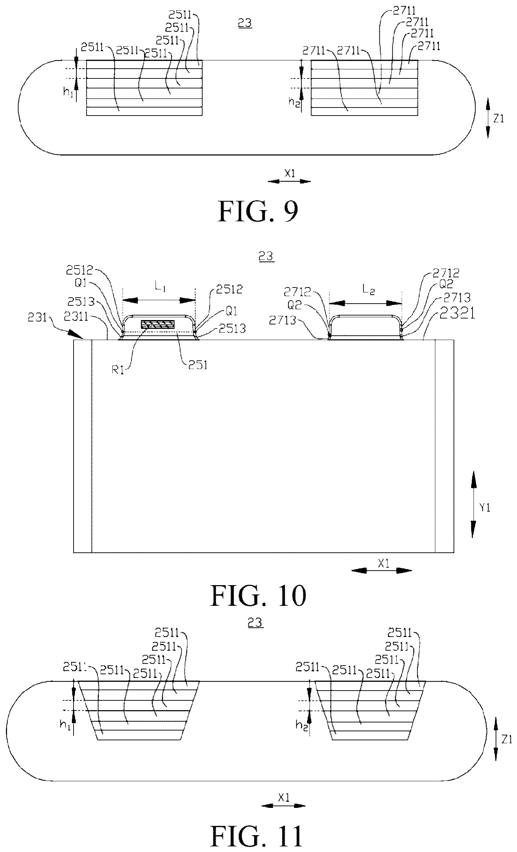

As shown in FIG. 8 and FIG. 9, in an embodiment in which the width of each negative tab portion 2711 is the same, after the plurality of negative tab portions 2711 are stacked to integrally form the positive tab 251, the width L₂ of the negative tab portion 2711 is the width of the negative tab 271, and the width L₂ of the negative tab portion 2711 is the distance between the two farthest second connecting positions Q₂ along the width direction of the negative tab portion 2711. The sum of the thicknesses h₂ of all the negative tab portions 2711 is the thickness of the negative tab 271, and the cross-sectional area of the negative tab 271 is the product of the width of the negative tab 271 and the thickness of the negative tab 271, that is, the product of the width of one negative tab portion 2711 and the sum of the thicknesses of all the negative tab portions 2711.

As shown in FIG. 10 and FIG. 11, in an embodiment in which the widths of the plurality of negative tab portions 2711 are different, after the plurality of negative tab portions 2711 are stacked to integrally form the negative tab 271, the width of the negative tab 271 is the distance between the two second connecting positions Q₂ farthest apart in the width direction of the negative tab portion 2711. The thickness of the negative tab 271 is the sum of the thicknesses h₂ of all the negative tab portions 2711, and h₂ is the thickness of one negative tab portion 2511. The current-carrying cross-sectional area of the negative tab 271 is a product of the width of the negative tab 271 and the thickness of the negative tab 271. The current-carrying cross-sectional area of the negative tab 271 is a product of the width of the negative tab 271 and the thickness of the negative tab 271.

It should be noted that FIGS. 8-11 all show the case where the negative tab portions 2711 have the same thickness.

As shown in FIG. 3 and FIGS. 8-11, in some embodiments, the positive electrode connecting assembly 25 includes a positive tab 251, the positive tab 251 is connected to the positive plate 231, and a current-carrying cross-sectional area of the positive tab 251 is smaller than a current-carrying cross-sectional area of the positive electrode lead-out portion 252.

That is, when the battery cell 20 is short-circuited, the fusing occurs at the positive tab 251. The current-carrying area A₁ of the positive electrode connecting assembly 25 is the current-carrying area of the positive tab 251.

The positive tab 251 includes a plurality of positive tab portions 2511 that are stacked, and the plurality of positive tab portions 2511 are stacked and welded to form the positive tab 251 integrally, for example, formed by molding. Each of the positive tabs 2511 and the positive current collector of the positive plate 231 may be integrally formed. Each of the positive tab portions 2511 and the positive current collector of the positive plate 231 may also be separately disposed and connected as a whole by welding connection, conductive adhesive connection, or the like.

In an embodiment in which the positive tab 2511 and the positive current collector of the positive plate 231 are integrally formed, the positive tab 2511 has two first side surfaces 2512 arranged opposite to each other along the width direction X₁ of the positive tab portion. Along the width direction Y₁ of the positive plate, the positive current collector of the positive plate 231 has a first end surface 2311, and the first end surface 2311 is connected to each first side surface 2512 through a first cambered surface 2513. The first cambered surface 2513 is connected to the first side surface 2512 at a first connecting position Q₁. The width direction X₁ of the positive tab portion may be perpendicular to the width direction Y₁ of the positive plate, and the width direction Y₁ of the positive plate is parallel to an extending direction of a winding axis of the electrode assembly.

As shown in FIG. 8 and FIG. 9, in an embodiment in which the width of each of the positive tab portions 2511 is the same, after the plurality of positive tab portions 2511 are stacked to integrally form the positive tab 251, the width L₁ of the positive tab portion 2511 is the width of the positive tab 251, and the width L₁ of the positive tab portion 2511 is the distance between the two first connecting positions Q₁ along the width direction X₁ of the positive tab portion. The sum of the thicknesses h₁ of all the positive tab portions 2511 is the thickness of the positive tab 251, and the current-carrying cross-sectional area of the positive tab 251 is the product of the width of the positive tab 251 and the thickness of the positive tab 251, that is, the product of the width of the positive tab portion 2511 and the sum of the thicknesses of all the positive tab portions 2511. In an embodiment in which the fusing region R₁ is located at the positive tab 251, A₁=the product of the width of the positive tab 2511 and the sum of the thicknesses of all the positive tab portions 2511, that is, A₁=L₁*h₁*N, where N is the number of the positive tab portions 2511, N is a natural number greater than or equal to 1, and h₁ is the thickness of one positive tab portion 2511.

As shown in FIG. 10 and FIG. 11, in an embodiment in which the widths of the plurality of positive tab portions 2511 are different, after the plurality of positive tab portions 2511 are stacked to integrally form the positive tab 251, the width of the positive tab 251 is the distance between the two first connecting positions Q₁ farthest apart in the width direction X₁ of the positive tab portion. The thickness of the positive tab 251 is the sum of the thicknesses h₁ of all the positive tab portions 2511. The current-carrying cross-sectional area of the positive tab 251 is the product of the width of the positive tab 251 and the thickness of the positive tab 251. In an embodiment in which the fusing region is disposed on the positive tab 251, A₁=the product of the width of the positive tab 251 and the thickness of the positive tab 251, that is, A₁=L₁*h ₁*N, where N is the number of the positive tab portions 2511, and N is a natural number greater than or equal to 1.

As shown in FIGS. 8 and 10, when the fusing occurs at the positive tab 251, the positive tab 251 has a fusing region R₁ that is fused at the time of a short circuit. Along the width direction Y₁ of the positive plate, the fusing region R₁ is located in a region between a connecting line of the two first connecting positions Q₁ farthest away from each other and one end of the positive tab 251 away from the positive plate.

It should be noted that FIG. 8-11 all show a case in which the thicknesses of the positive tab portions 2511 are the same.

The current-carrying cross-sectional area of the positive tab 252 is smaller than the current-carrying cross-sectional area of the positive electrode lead-out portion 24, and the fusing may occur at the positive tab 251 during the short circuit, so that the fusing occurs at the positive electrode connecting assembly 25, and fusing may be implemented in the positive electrode connecting assembly 25 during the short circuit of the battery cell 20 by using the structure of the positive tab 251 itself, so that the structure of the battery cell 20 is simpler.

In an embodiment in which the fusing occurs at the positive tab 251, a rated capacity of the battery cell 20 is W, with a unit of Ah, A₁/W≥0.15 being satisfied.

The rated capacity of the battery cell 20 may be the capacity of the battery cell 20 in a state in which the battery cell 20 is fully charged (100% SOC). The rated capacitance may be tested with reference to GBT 31486-2015.

Exemplarily, A₁/W may be 0.15, 0.2, 0.25, 0.3, 0.35, 0.4, 0.45, 0.5, or the like.

A₁/W≥0.15, so that the positive tab 251 has a better current-carrying capability, and the temperature rise at the positive tab 251 is relatively large, thereby reducing the risk of fusing at the negative electrode connecting assembly 27 when the battery cell 20 is short-circuited, reducing the overall temperature of the battery cell 20 when the short-circuit path of the battery cell 20 is cut off, and reducing problems such as fire and explosion, so that the battery cell 20 has better reliability.

In some embodiments, the positive tab 251 is connected to the positive electrode lead-out portion 24.

The positive tab 251 is directly connected to the positive electrode lead-out portion 24. The positive tab 251 and the positive electrode lead-out portion 24 may be connected by welding connection, conductive adhesive connection, or the like.

The positive tab 251 is connected to the positive electrode lead-out portion 24, and the positive electrode connecting assembly 25 is not provided with the positive electrode adapter 252, which can simplify the structure of the battery cell 20.

In an embodiment in which fusing occurs at the positive tab 251, the number of the positive tab portions 2511 is less than the number of the negative tab portions 2711, so that the cross-sectional area of the positive tab 251 is favorably less than the cross-sectional area of the negative tab 271, and thus, the current-carrying cross-sectional area of the fusing region located at the positive tab 251 is less than the current-carrying cross-sectional area of the negative tab 271, which is beneficial to fusing at the positive connecting assembly 25 when the battery cell 20 is short-circuited, thereby reducing the overall temperature of the battery cell 20 when the short-circuit path of the battery cell 20 is cut off, reducing problems such as fire and explosion, so that the battery cell 20 has better reliability.

In an embodiment in which the fusing occurs at the positive tab 251, the width of the positive tab 251 is less than the width of the negative tab 271, so that the cross-sectional area of the positive tab 251 is favorably less than the cross-sectional area of the negative tab 271, and thus, the current-carrying cross-sectional area of the fusing area located at the positive tab 251 is less than the current-carrying cross-sectional area of the negative tab 271, which is beneficial to fusing at the positive connecting assembly 25 when the battery cell 20 is short-circuited, thereby reducing the overall temperature of the battery cell 20 when the short-circuit path of the battery cell 20 is cut off, reducing problems such as fire and explosion, so that the battery cell 20 has better reliability.

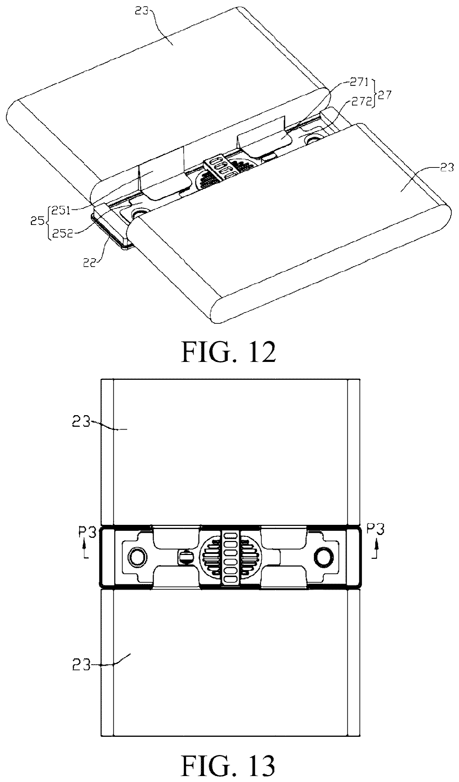

As shown in FIG. 3 and FIG. 12-17, in an embodiment in which the fusing area is disposed on the positive tab 251, the positive electrode connecting assembly 25 further includes a positive electrode adapter 252, where the positive electrode adapter 252 is connected to the positive tab 251 and the positive electrode lead-out portion 24; the positive electrode adapter 252 includes a first welding region 252a, a second welding region 252b, and a transition connecting portion 252c, the first welding region 252a is connected to the positive tab 251, the second welding region 252b is connected to the positive electrode lead-out portion 24, the transition connecting portion 252c is connected between the first welding region 252a and the second welding region 252b, and a minimum cross-sectional area of the transition connecting portion 252c is larger than or equal to a minimum cross-sectional area of the first welding region 252a, and/or a minimum cross-sectional area of the transition connecting portion 252c is larger than or equal to a minimum cross-sectional area of the second welding region 252b.

The materials of the positive electrode adapter 252 and the positive tab 251 may be the same or different. The positive tab 251 and the positive electrode lead-out portion 24 are electrically connected by the positive electrode adapter 252. The positive tab 251 and the positive electrode adapter 252 may be connected by welding connection, conductive adhesive connection, or the like. The positive electrode lead-out portion 24 and the positive electrode adapter 252 may be connected by welding connection, conductive adhesive connection, or the like. The current-carrying cross-sectional area of the positive tab 251 is smaller than the current-carrying cross-sectional area of the positive electrode adapter 252.

The first welding region 252a is a welding mark region formed by welding the positive tab 251 and the positive electrode adapter 252. The second welding region 252b is a welding mark region formed by welding the positive electrode adapter 252 and the positive electrode lead-out portion 24.

The positive tab 251 is connected to the positive electrode lead-out portion 24 through the positive electrode adapter 252, which facilitates the electrical connection between the positive tab 251 and the positive electrode lead-out portion 24, and is beneficial to improving the current-carrying capability of the positive electrode connecting assembly 25. The cross-sectional area of the transition connecting portion 252c is larger than or equal to the cross-sectional area of the first welding region 252a, and/or the cross-sectional area of the transition connecting portion 252c is larger than or equal to the cross-sectional area of the second welding region 252b, and the cross-sectional area of the transition connecting portion 252c is relatively large, which may improve the current-carrying capability of the transition connecting portion 252c, reduce the temperature rise of the positive electrode adapter 252, and reduce the risk of fusing of the positive electrode adapter 252.

As shown in FIG. 3 and FIG. 12-14, in some embodiments, the positive electrode connecting assembly 25 further includes a positive electrode adapter 252 and a positive tab 251, where the positive tab 251 is connected to the positive plate 231, the positive electrode adapter 252 is connected to the positive tab 251 and the positive electrode lead-out portion 24, a minimum current-carrying cross-sectional area of the positive electrode adapter 252 is smaller than a current-carrying cross-sectional area of the positive electrode lead-out portion 24, and a current-carrying minimum cross-sectional area of the positive electrode adapter 252 is smaller than a current-carrying cross-sectional area of the positive tab 251.

That is, when the battery cell 20 is short-circuited, the fusing occurs at the positive electrode adapter 252. The fusing region is formed in a region where the positive electrode adapter 252 is not connected to the positive tab 251 and the positive electrode lead-out portion 24. The current-carrying cross-sectional area of the fusing region may be the minimum current-carrying cross-sectional area of the positive electrode adapter 252, or may be a region at a certain distance from the position of the positive electrode adapter 252 where the current-carrying cross-sectional area is the minimum.

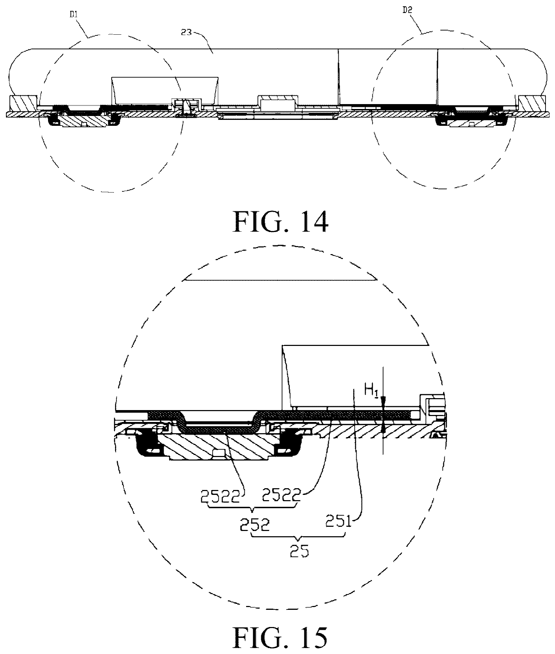

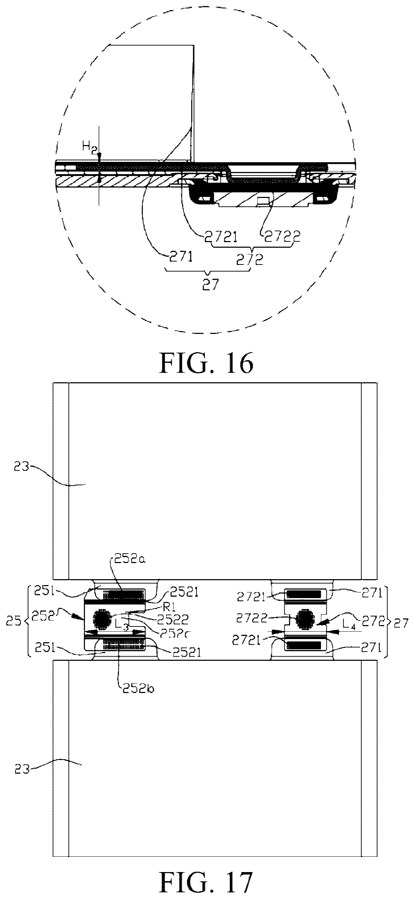

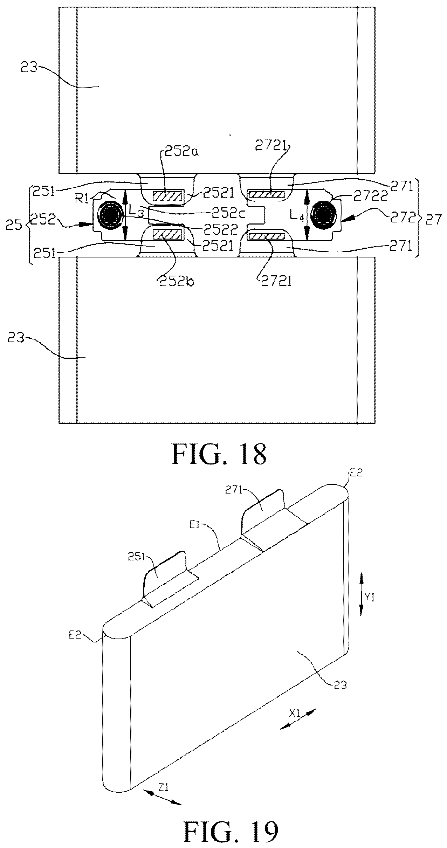

As shown in FIGS. 14 and 15, the current-carrying cross-sectional area of the positive electrode adapter 252 may be obtained by observing and selecting a region of the positive electrode adapter 252 where the positive tab 251 and the positive electrode lead-out portion 24 are not connected and the current-carrying cross-sectional area is smaller, and measuring the current-carrying cross-sectional area of the positive electrode adapter 252 in this region. The width of the positive electrode adapter 252 is L₃, the thickness of the positive electrode adapter 252 is H₁, and the current-carrying cross-sectional area of the positive electrode adapter 252 is =L₃*H₁. In the embodiment in which the fusing region is formed on the positive electrode adapter 252, A₁ =L₃*H₁. The size of the positive electrode adapter 252 in the width direction is smaller than the size of the positive electrode adapter 252 in the lengthwise direction, and the width direction of the positive electrode adapter 252, the lengthwise direction of the positive electrode adapter 252, and the thickness direction of the positive electrode adapter 252 are perpendicular to each other. For the positive electrode adapters 252 of different structures, the width directions of the positive electrode adapters 252 may be different, and therefore, the measurement directions of the widths L₃ of the positive electrode adapters 252 are different. As shown in FIG. 17, the width direction of the positive electrode adapter 252 is along the left-right direction in the figure. The width direction of the positive plate 231 in FIG. 18 is along the vertical direction in the figure.

The minimum current-carrying cross-sectional area of the positive electrode adapter 252 is smaller than the current-carrying cross-sectional area of the positive tab 251, which means that when the battery cell 20 is short-circuited, the current-carrying cross-sectional area of the fusing position of the positive electrode adapter 252 is smaller than the current-carrying cross-sectional area of the fusing region of the positive tab 252 when the battery cell 20 is not provided with the positive electrode adapter 252, so that in the case where the positive electrode connecting assembly 25 includes the positive tab 251 and the positive electrode adapter 252, the fusing position occurs at the positive electrode adapter 251.

The positive tab 251 is connected to the positive electrode lead-out portion 24 through the positive electrode adapter 252, which facilitates the electrical connection between the positive tab 251 and the positive electrode lead-out portion 24, and is beneficial to improving the current-carrying capability of the positive electrode connecting assembly 25. The fusing region is disposed on the positive electrode adapter 252, so that when the battery cell 20 is short-circuited, the positive electrode adapter is fused, thereby cutting off the short-circuit path, and fusing at the positive electrode connecting assembly 25 is realized, thereby reducing the overall temperature of the battery cell 20 when the short-circuit path of the battery cell 20 is cut off, reducing problems such as fire and explosion, so that the battery cell 20 has better reliability.

In an embodiment in which the minimum current-carrying cross-sectional area of the positive electrode adapter 252 is smaller than the current-carrying cross-sectional area of the positive tab 251, the positive electrode adapter 252 includes a first welding region 252a, a second welding region 252b, and a transition connecting portion 252c, where the first welding region 252a is connected to the positive tab 251, the second welding region 252b is connected to the positive electrode lead-out portion 24, the transition connecting portion 252c is connected between the first welding region 252a and the second welding region 252b, and the cross-sectional area of the transition connecting portion 252c is larger than or equal to the minimum cross-sectional area of the first welding region 252a, and/or the cross-sectional area of the transition connecting portion 252c is larger than or equal to the minimum cross-sectional area of the second welding region 252b.

The cross-sectional area of the transition connecting portion 252c is the cross-sectional area at L₃ in FIGS. 15, 17, and 18. When the transition connecting portion 252c has a plurality of portions with different cross-sectional areas, the portion with the smallest cross-sectional area is used as the cross-sectional area of the transition connecting portion 252c.

The cross-sectional area of the transition connecting portion 252c of the positive electrode adapter 252 is the smallest, and in an embodiment in which the fusing occurs at the positive electrode adapter 252 during the short circuit, the fusing region R₁ is located at the transition connecting portion 252c, that is, the fusing region R₁ is located at the region between the first welding region 252a and the second welding region 252b.

The minimum cross-sectional area of the transition connecting portion 252c is larger than or equal to the minimum cross-sectional area of the first welding region, and/or the minimum cross-sectional area of the transition connecting portion is larger than or equal to the minimum cross-sectional area of the second welding region, which is beneficial for the positive electrode adapter to have a high current-carrying capacity.

In an embodiment in which the fusing region R₁ is disposed on the positive electrode adapter 252, a rated capacity of the battery cell 20 is W, with a unit of Ah, A₁/W≥0.2 being satisfied.

Exemplarily, A₁/W may be 0. 1, 0. 25, 0. 3, 0. 35, 0. 4, 0. 45, 0. 5, 0. 55, or the like.

Thus, the positive electrode adapter 252 has a better current-carrying capability, and the temperature rise at the positive electrode adapter 252 can be relatively large, thereby reducing the risk of fusing at the negative electrode connecting assembly 27 when the battery cell 20 is short-circuited, reducing the overall temperature of the battery cell 20 when the short-circuit path of the battery cell 20 is cut off, and reducing problems such as fire and explosion, so that the battery cell 20 has better reliability.

As shown in FIG. 14, in some embodiments, a thickness of at least a part of the positive electrode adapter 252 is H₁, 1.0 mm≤H₁≤1.5 mm being satisfied.

The thickness of the positive electrode adapter 252 may satisfy 1.0 mm≤H₁≤1.5 mm at any position, or may satisfy 1.0 mm≤H₁≤1.5 mm only in a part of the region.

Exemplarily, H₁ may be 1.0 mm, 1.1 mm, 1.2 mm, 1.3 mm, 1.4 mm, 1.5 mm, or the like.

The thickness H₁ of at least a part of the positive electrode adapter 252 satisfies 1.0 mm≤H₁≤1.5 mm, which is beneficial for the positive electrode adapter 252 to have a better current-carrying capability and improve the formation of the fast charging battery 100, and is also beneficial to the connection of the positive tab 251 and the positive electrode lead-out portion 24 with the positive electrode adapter 252, respectively, and is beneficial to improving the connecting stability of the positive tab 251 and the positive electrode adapter 252 and the connecting stability of the positive electrode lead-out portion 24 and the positive electrode adapter 252.

As shown in FIGS. 14-18, in some embodiments, the positive electrode adapter 252 includes a first connecting portion 2521 and a second connecting portion 2522, where the first connecting portion 2521 is connected to the positive tab 251, the second connecting portion 2522 is connected to the positive lead-out portion 24, a thickness of the first connecting portion 2521 is greater than or equal to a thickness of the second connecting portion 2522, and the thickness of the first connecting portion 2521 is H₁, 1.0 mm≤H₁≤1.5 mm being satisfied.

The first connecting portion 2521 and the positive tab 251 may be connected by welding connection, conductive adhesive connection, or the like, so as to realize the electrical connection between the positive electrode adapter 252 and the positive tab 251. The second connection portion 2522 and the positive lead-out portion 24 may be connected by welding connection, conductive adhesive connection, or the like, so as to realize the electrical connection between the positive electrode adapter 252 and the positive electrode lead-out portion 24. In an embodiment in which the fusing region is disposed on the positive electrode adapter 252, the fusing region is disposed on the positive electrode adapter 252 and located between the first connecting portion 2521 and the second connecting portion 2522. The first welding region 252a is a part of the first connection portion 2521. The second welding region 252b is a part of the second connecting portion 2522.

The thickness H₁ of the first connecting portion 2521 may be 1.05 mm, 1.15 mm, 1.25 mm, 1.35 mm, 1.45 mm, 1.47 mm, 1.5 mm, or the like.

The thickness of the first connecting portion 2521 is greater than the thickness of the second connecting portion 2522, which can improve the current-carrying capability of the positive electrode adapter 252, and meanwhile, improve the superior welding ratio of the positive electrode lead-out portion 24 and the positive electrode adapter 252.

In some embodiments, a material of the positive tab 251 is aluminum, and/or a material of the positive electrode adapter 252 is aluminum.

The material of the positive tab 251 may be aluminum, and the material of the positive electrode adapter 252 may a material other than aluminum, such as nickel. The material of the positive electrode adapter 252 may also be aluminum, and the material of the positive tab 251 may be a material other than aluminum, for example, nickel. The materials of the positive tab 251 and the positive electrode adapter 252 may also both be aluminum, so that the positive tab 251 and the positive electrode adapter 252 have better connecting stability.

The material of the positive tab 251 and/or the positive electrode adapter 252 is aluminum, so that the positive electrode connecting assembly 25 has a better current-carrying capability, and the positive electrode adapter assembly is easier to fuse, so that when the battery cell 20 is short-circuited, fusing can occur at the positive connecting assembly 25, thereby reducing the overall temperature of the battery cell 20 when the short-circuit path of the battery cell 20 is cut off, and thus reducing problems such as fire and explosion, so that the battery cell 20 has better reliability.

As shown in FIG. 3 and FIGS. 12-18, in some embodiments, the negative electrode connecting assembly 27 further includes a negative electrode adapter 272 and a negative tab 271, the negative tab 271 is connected to the negative plate 232, and the negative electrode adapter 272 is connected to the negative tab 271 and the negative electrode lead-out portion 26.

The material of the negative electrode adapter 272 and the material of the negative tab 271 may be the same. The negative tab 271 and the negative electrode lead-out portion 26 are electrically connected by a negative electrode adapter 272. The negative tab 271 and the negative electrode adapter 272 may be connected by welding connection, conductive adhesive connection, or the like. The negative electrode lead-out portion 26 and the negative electrode adapter 272 may be connected by welding connection, conductive adhesive connection, or the like.

The negative tab 271 is connected to the negative electrode lead-out portion 26 through the negative electrode adapter 272, which facilitates the electrical connection between the negative tab 271 and the negative electrode lead-out portion 26, and is beneficial to improving the current-carrying capability of the negative electrode connecting assembly 27.

In some embodiments, the minimum current-carrying cross-sectional area of the negative electrode adapter 272 is larger than the maximum current-carrying cross-sectional area of the negative tab 271.

It can be understood that the cross-sectional area of the negative electrode adapter 272 at any position is larger than the cross-sectional area of the negative tab 271 at any position.

As shown in FIG. 16, the current-carrying cross-sectional area of the negative electrode adapter 272 may be obtained by observing and selecting a region of the negative electrode adapter 272 where the negative tab 271 and the negative electrode lead-out portion 26 are not connected and the current-carrying cross-sectional area is smaller, and measuring the current-carrying cross-sectional area of the negative electrode adapter 272 in this region. The width of the negative electrode adapter 272 is L₄, the thickness of the negative electrode adapter 272 is H₁, and the current-carrying cross-sectional area of the negative electrode adapter 272 is =L₄*H₂. The size of the negative electrode adapter 272 in the width direction is smaller than the size of the negative electrode adapter 272 in the lengthwise direction, and the width direction of the negative electrode adapter 272, the lengthwise direction of the negative electrode adapter 272, and the thickness direction of the negative electrode adapter 272 are perpendicular to each other. For the negative electrode adapters 272 of different structures, the width directions of the negative electrode adapters 272 may be different, and therefore, the measurement directions of the widths L₄ of the negative electrode adapters 272 are different. As shown in FIG. 15, the width direction of the negative electrode adapter 272 is along the left-right direction in the figure. The width direction of the negative plate 232 in FIG. 16 is along the vertical direction in the figure.

The minimum current-carrying cross-sectional area of the electrode adapter is larger than the maximum current-carrying cross-sectional area of the negative tab 271, so that the current-carrying capability of the negative electrode adapter 272 is better, which is beneficial to forming the fast charging battery 100.

In some other embodiments, the minimum current-carrying cross-sectional area of the negative tab 271 is larger than the maximum current-carrying cross-sectional area of the negative electrode adapter 272.

It can be understood that the cross-sectional area of the negative tab 271 at any position is larger than the cross-sectional area of the negative electrode adapter 272 at any position.

A method for measuring the minimum current-carrying cross-sectional area of the negative tab 271 and the maximum current-carrying cross-sectional area of the negative electrode adapter 272 may refer to the method for measuring the current-carrying cross-sectional area of the negative tab 271 and the current-carrying cross-sectional area of the negative electrode adapter 272, which will not be repeated here.

The minimum current-carrying cross-sectional area of the negative tab 271 is larger than the maximum current-carrying cross-sectional area of the negative electrode adapter 272, which is beneficial for the negative tab 271 to have a better current-carrying capability.

As shown in FIG. 14, in some embodiments, a thickness of at least a part of the negative electrode adapter 272 is H₂, 0.6mm≤H₂≤1.0mm being satisfied.

The thickness of the negative electrode adapter 272 may satisfy 0.6mm≤H₂≤1.0mm at any position, or may satisfy 0.6mm≤H₂≤1.0mm only in a part of the region.

For example, H₂ may be 0.6 mm, 0.7 mm, 0.8 mm, 0.9 mm, 1.0 mm, or the like.

The thickness H₂ of at least a part of the negative electrode adapter 272 satisfies 0.6mm≤H₂≤1.0mm, which is beneficial for the negative electrode adapter 272 to have a better current-carrying capability and improve the formation of the fast charging battery 100, and is also beneficial to the connection of the negative tab 271 and the negative electrode lead-out portion 26 with the negative electrode adapter 272, respectively, and is beneficial to improving the connecting stability of the negative tab 271 and the negative electrode adapter 272 and the connecting stability of the negative electrode lead-out portion 26 and the negative electrode adapter 272.

As shown in FIGS. 14-18, in some embodiments, the negative electrode adapter 272 includes a third connecting portion 2721 and a fourth connecting portion 2722, where the third connecting portion 2721 is connected to the negative tab 271, the fourth connecting portion 2722 is connected to the negative electrode lead-out portion 26, a thickness of the third connecting portion 2721 is greater than or equal to a thickness of the fourth connecting portion 2722, and the thickness of the third connecting portion 2721 is H₂, 0.6 mm≤H₂≤1.0 mm being satisfied.

The third connecting portion 2721 and the negative tab 271 may be connected by welding connection, conductive adhesive connection, or the like, so as to realize the electrical connection between the negative electrode adapter 272 and the negative tab 271. The fourth connecting portion 2722 and the negative electrode lead-out portion 26 may be connected by welding connection, conductive adhesive connection, or the like, so as to realize the electrical connection between the negative electrode adapter 272 and the negative electrode lead-out portion 26. The thickness H₂ of the third connecting portion 2721 may be 0.6 mm, 0.65 mm, 0.75 mm, 0.85 mm, 0.95 mm, 1.0 mm, or the like.

The thickness of the third connecting portion 2721 is greater than the thickness of the fourth connecting portion 2722, which can improve the current-carrying capability of the negative electrode adapter 272, and meanwhile, improve the superior welding ratio of the negative electrode lead-out portion 26 and the negative electrode adapter 272.

In some embodiments, the minimum current-carrying cross-sectional area of the positive electrode adapter assembly is smaller than the minimum current-carrying cross-sectional area of the negative tab 271.

The minimum current-carrying cross-sectional area of the positive electrode adapter assembly 25 may be located at the positive tab 251 of the positive electrode connecting assembly 25, and the fusing occurs at the positive tab 251 during the short circuit. The cross-sectional area of the positive tab 251 is smaller than the minimum cross-sectional area of the negative tab 271.

The minimum cross-sectional area of the positive electrode adapter assembly 25 may be located in the positive electrode adapter 252 that may also be disposed on the positive electrode connecting assembly 25, and the fusing occurs in the positive electrode adapter 252 during the short circuit. The current-carrying cross-sectional area of the positive electrode adapter 252 is smaller than the minimum current-carrying cross-sectional area of the negative tab 271. The current-carrying cross-sectional area of the positive electrode adapter 252 is smaller than the minimum current-carrying cross-sectional area of the positive tab 251.

The minimum current-carrying cross-sectional area of the positive electrode adapter assembly 25 is smaller than the minimum current-carrying cross-sectional area of the negative tab 271, which is beneficial to fusing at the positive connector when the battery cell 20 is short-circuited, thereby reducing the overall temperature of the battery cell 20 when the short-circuit path is fused, thereby reducing problems such as fire and explosion, so that the battery cell 20 has better reliability.

In some embodiments, a material of the negative tab 271 is copper, and/or a material of the negative electrode adapter 272 is copper.

The material of the negative tab 271 may be copper, and the material of the negative electrode adapter 272 may be a material other than copper, such as nickel. The material of negative electrode adapter 272 may also be copper, and the material of the negative tab 271 may be a material other than copper, such as nickel. The materials of the negative tab 271 and the negative electrode adapter 272 may also both be aluminum, so that the negative tab 271 and the negative electrode adapter 272 have better connecting stability.

The material of the negative tab 271 and/or the negative electrode adapter 272 is copper, so that the negative electrode connecting assembly 27 has a good current-carrying capability, which is beneficial to the fast charging of the battery cell 20.

In some embodiments, the current-carrying cross-sectional area of the negative electrode connection component 27 is smaller than the current-carrying cross-sectional area of the negative electrode lead-out portion 26.

In an embodiment in which the negative electrode lead-out portion 26 is disposed on the cover body 22, a part of the negative electrode lead-out portion 26 may extend into the housing 21, a part of the negative electrode lead-out portion may extend to the side of the cover body 22 away from the housing 21, and a part of the negative electrode lead-out portion may be disposed in a through hole of the cover body 22 in a penetrating manner. The minimum diameter of the negative electrode lead-out portion 26 is D₂, with a unit of mm, and the current-carrying cross section of the negative electrode lead-out portion 26 is =π*(D₂/2)2. Exemplarily, as shown in FIG. 4 and FIG. 5, the negative electrode lead-out portion 26 is riveted to the cover body 22, the negative electrode lead-out portion 26 includes a fourth portion 261, a fifth portion 262, and a sixth portion 263, the fourth portion 261 and the sixth portion 263 are respectively connected to two ends of the fifth portion 262, the fourth portion 261 and the sixth portion 263 are respectively located on two sides of the cover body 22 in the thickness direction, the fourth portion 261 is located on the side of the cover body 22 away from the housing 21, and the sixth portion 263 is located on the side of the cover body 22 facing the housing 21. The fourth portion 261 is of a rectangular structure, the fifth portion 262 is of a cylindrical structure, and the sixth portion 263 may be of a cylindrical or rectangular structure. The cross-sectional area of the fourth portion 261 is larger than the cross-sectional area of the fifth portion 262, and the cross-sectional area of the sixth portion 263 is larger than the cross-sectional area of the fifth portion 262. The fifth portion 262 is a portion of the negative electrode lead-out portion 26 with the smallest cross-sectional area. The diameter of the fifth portion 262 is the minimum diameter D₂ of the positive electrode lead-out portion 24, with a unit of mm, and the cross-sectional area of the fifth portion 262 is the current-carrying cross-section of the negative electrode lead-out portion 26, that is, the cross-sectional area of the fifth portion 262 is =π* (D₂/2)2.

As shown in FIG. 6 and FIG. 7, the negative electrode lead-out portion 26 is connected to the cover body 22, the negative electrode lead-out portion 26 includes a fourth portion 261 and a fifth portion 262, the fourth portion 261 is connected to one end of the fifth portion 262, and the fourth portion 261 is located on the side of the cover body 22 away from the housing 21. The fifth portion 262 is disposed in the through hole of the cover body 22 in a penetrating manner. The fourth portion 261 and the fifth portion 262 are both of cylindrical structures. The minimum diameter of the negative electrode lead-out portion 26 is located at the end of the fourth portion 261 away from the fifth portion 262.

The current-carrying cross-sectional area of the negative electrode connecting assembly 27 is smaller than the current-carrying cross-sectional area of the negative electrode lead-out portion 26, so that the battery cell 20 is difficult to be fused at the negative electrode lead-out portion 26, which is beneficial for the negative electrode lead-out portion 26 to have a batter current-carrying capability, thereby improving the reliability of the battery cell 20.

In some embodiments, an average charge rate of the battery cell 20 is K, that is, the battery cell 6 can realize KW fast charging. Optionally, K≥2, for example, K is 2, 3, 4, 5, or 6.

The charging rate is a measure of a charging speed, and refers to a current value required when the battery 100 is charged to its rated capacity within a specified time.

Exemplarily, taking 4C fast charging as an example, the battery cell 20 may be subjected to a fast charging test according to the following method:
(i) The battery cell 20 is left stand for 10 min, and then the battery cell 20 is charged to 97% SOC (State Of Charge) at an equivalent current of 4C.
(ii) The battery cell 20 is left stand for 30 min, and then discharged to 3% SOC at a constant current of 1C.
(iii) Steps (I) and (ii) are repeated for 50 times;
(iv) The battery cell 20 is charged to 97% SOC at an equivalent 4C current; and
(v) The battery cell 20 is disassembled, and a lithium plating condition of the surface of the negative plate 232 is observed by taking a lithium-ion battery cell as an example. Exemplarily, the negative plate 232 is flattened, and the total area S₁ of the negative electrode active substance layer on one side of the negative plate 232 is measured; the maximum size a of each lithium plating point (no lithium plating around the lithium plating point) on the negative electrode active substance layer along the lengthwise direction of the negative plate 232 is measured, the maximum size b of each lithium plating point along the width direction of the negative plate 232 is measured, a/2 is used as a median value of the lithium plating points in the lengthwise direction, b/2 is used as a median value of the lithium plating points in the width direction, and the area of the lithium plating points is a×b/4. The sum of the areas of all the lithium plating points is S₂, and if S₂/S₁≤5%, it is considered that the battery cell 6 meets the 4C fast charging requirement.

K≥2, which can realize fast charging of the battery cell 20.

In some embodiments, the positive electrode connecting assembly 25 includes a positive tab 251, the positive tab 251 includes a plurality of positive tab portions 2511 that are stacked, the negative electrode connecting assembly 27 includes a negative tab 271, and the negative tab 271 includes a plurality of negative tab portions 2711 that are stacked; the electrode assembly 23 is a wound electrode assembly 23, the number of the negative tab portions 2711 of the electrode assembly 23 is M₁, the number of layers of the negative plate 232 of the electrode assembly 23 is M₂, 1/2≤M₁/M₂≤1 being satisfied; and/or the number of the positive tab portions 2511 of the electrode assembly 23 is N₁, and the number of layers of the positive plate 231 of the electrode assembly 23 is N₂, 1/2≤N₁/N₂≤1 being satisfied.

The electrode assembly 23 includes a straight portion E₁ and two bent portions E₂, and the two bent portions E₂ are connected to two opposite ends of the straight portion E₁. The positive tab 251 and the negative tab 271 are both disposed in the straight portion E₁. A part of the negative plate 232 is located in the straight portion E₂, and M₂ is the number of the negative plates 232 located in the straight portion E₁ and stacked in the thickness direction Z₁ of the electrode assembly.

A part of the positive plate 231 is located in the straight portion E₂, and N₂ is the number of the positive plates 231 located in the straight portion E₁ and stacked in the thickness direction Z₁ of the electrode assembly.

The thickness direction Z₁ of the electrode assembly, the arrangement direction of the two bending portions E₂, and the extension direction of the winding axis of the electrode assembly 23 are perpendicular to each other. The positive tab 251 and the negative tab 252 are disposed in the straight region E₁, and the width direction X₁ of the positive tab is parallel to the arrangement direction of the two bending portions E₂.

A turn of the positive plate 231 of the wound electrode assembly 23 includes two layers of positive plates 231 stacked in the thickness direction Z₁ of the electrode assembly. Exemplarily, one positive tab 2511 may be disposed in one turn of the positive plate 231, that is, one positive tab 2511 is disposed in two layers of positive plates 231.

One turn of the negative plate 232 of the wound electrode assembly 23 includes two layers of negative plates 232 stacked in the thickness direction of the electrode assembly 23. Exemplarily, one negative tab 2711 may be disposed in one layer of the negative plate 232, that is, two negative tabs 2711 are disposed in one turn of the negative plate 232. One negative tab portion 2711 may be disposed in 3/4 turns of the negative plate 232.

1/2≤N₁/N₂≤ 1 may be understood as follows: one positive tab 2511 is disposed in at least two layers of positive plates 231 of the positive plate 231, that is, one positive tab 2511 is disposed in at least one turn of the positive plate 231. One positive tab portion 2511 is disposed in at most one layer of the positive plate 231, that is, one positive tab portion 2511 is disposed in at most one turn of the positive plate 231.

1/2≤M₁/M₂≤ 1 may be understood as follows: one negative tab portion 2711 is disposed in at least two layers of negative plates 232 of the negative plate 271, that is, one negative tab portion 2711 is disposed in at least one turn of the negative plate 232. One negative tab portion 2711 is disposed in the first layer of the negative plate 232, that is, one negative tab portion 2711 is disposed in at most one turn of the negative plate 232.

As shown in FIG. 19, one positive tab portion 2511 (not shown in FIG. 19) is disposed in two layers of positive plates 231 of the positive plate 231, each layer of negative plates 232 of the negative plate 232 is provided with one negative tab portion 2711 (not shown in FIG. 19), and all the positive tab portions 2511 are stacked along the thickness direction Z₁ of the electrode assembly to form the positive tab 251. It can be seen from FIG. 19 that in the thickness direction Z1 of the electrode assembly, the positive tab portions 2511 are not disposed in some regions, the positive tab 251 formed by all the positive tab portions 2511 is located on one side of a central plane of the electrode assembly 23, and in the thickness direction Z1 of the electrode assembly, the negative tab portions 2711 are disposed in all region, a part of the negative tab 271 formed by all the negative tab portions 2711 is located on one side of the central plane of the electrode assembly 23, and the other part of the negative tab 271 formed by all the negative tab portions 2711 is located on the other side of the central plane of the electrode assembly 23. The central plane of the electrode assembly 23 is a plane that is parallel to the extending direction of the winding axis of the electrode assembly 23 and the arrangement direction of the two bent portions E of the electrode assembly 23 and passes through the winding axis of the electrode assembly 23.

As shown in FIG. 18, one positive tab portion 2511 (not shown in FIG. 18) is disposed in two layers of positive plates 231 of the positive plate 231, and one negative tab portion 2711 (not shown in FIG. 18) is disposed in 3/4 turn of negative plates 232 of the negative plate 232. It can be seen from FIG. 18 that in the thickness direction Z₁ of the electrode assembly, the positive tab portion 2511 is not disposed in a part of the region, the positive tab 251 formed by all the positive tabs 2511 is located on one side of the central plane of the electrode assembly 23, and in the thickness direction Z₁ of the electrode assembly, the negative tab portion 2711 is not disposed in a part of the region.

If 1/2≤M₁/M₂≤ 1 and/or 1/2≤N₁/N₂≤ 1, the positive tab 251 and the negative tab 271 can have a relatively high current-carrying capability, and it is also beneficial to improving the charging rate of the battery cell 20 to form the fast charging battery 100.

Optionally, 1/2<M₁/M₂≦3/4, 1/2≦N₁/N₃, so that the positive tab 251 and the negative tab 271 have a better current-carrying capability, thereby improving the fast charging capability of the battery cell 20.

The battery cell 20 may include one electrode assembly 23 or a plurality of electrode assemblies 23, the positive tabs 251 of the plurality of electrode assemblies 23 are electrically connected, and the negative tabs 271 of the plurality of electrode assemblies 23 are electrically connected. Exemplarily, as shown in FIG. 3, in some embodiments, the battery cell 20 includes two electrode assemblies 23.

The positive tabs 251 of the two electrode assemblies 23 are electrically connected. In an embodiment in which the positive electrode connecting assembly 25 includes the positive tab 251, the positive tabs 251 of the two electrode assemblies 23 are both connected to the positive electrode lead-out portion 24, so that the positive tabs 251 of the two electrode assemblies 23 are electrically connected. In an embodiment in which the positive electrode connecting assembly 25 includes the positive tab 251 and the positive electrode adapter 252, the positive tabs 251 of the two electrode assemblies 23 are both connected to the positive electrode connector, thereby realizing the electrical connection of the positive tabs 251 of the two electrode assemblies 23.

The negative tabs 271 of the two electrode assemblies 23 are electrically connected. In an embodiment in which the negative electrode connecting assembly 27 includes the negative tab 271, the negative tabs 271 of the two electrode assemblies 23 are both connected to the negative electrode lead-out portion 26, so that the negative tabs 271 of the two electrode assemblies 23 are electrically connected. In an embodiment in which the negative electrode connecting assembly 27 includes the negative tab 271 and the negative electrode adapter 272, the negative tabs 271 of the two electrode assemblies 23 are both connected to the negative electrode connector, thereby realizing the electrical connection of the negative tabs 271 of the two electrode assemblies 23.

The battery cell 20 includes two electrode assemblies 23, which is beneficial for the battery cell 20 to have a high energy density.

In some embodiments, the negative plate 232 includes a negative electrode active substance layer, and the specific surface area of the particles of the negative electrode active substance layer is 0.5 m²/g to 5 m²/g.

The negative electrode active substance layer may be graphite, hard carbon, soft carbon, silicon oxygen, silicon carbon, or the like.

The specific surface area of particles in the negative electrode active substance layer is the total area of the negative electrode active substance per unit mass. For example, the specific surface area of the particles in the negative electrode active substance layer may be 0.5 m²/g, 1 m²/g, 1.5m²/g, 2 m²/g, 2.5 m²/g, 3 m²/g, 3.5 m²/g, 4 m²/g, 4.5 m²/g, 5 m²/g, or the like.

Unless otherwise specified, the specific surface area in this application is determined by a specific surface instrument-static capacity method with reference to the standard GB/T 19587-2017, and specifically, according to the embodiments of this application, the specific surface area may be measured by a specific surface and porosity analyzer (instrument model: Micromeritics TriStar 3020) according to instructions of the manufacturer.

The specific surface area of the particles of the negative electrode active substance layer is 0.5 m²/g to 5 m²/g, which can increase the ion intercalation sites of the negative electrode active material and improve the rate of ion intercalation into the negative active material, thereby improving the charging efficiency of the battery cell 20 and improving the fast charging capability of the battery cell 20.

In some embodiments, the negative plate 232 includes a negative electrode active substance layer, and a volume distribution particle size DV₅₀ of the negative electrode active substance layer is ≤15 µm.

The volume distribution particle diameter DV₅₀ of the negative electrode active substance layer may be 1 µm, 3 µm, 5 µm, 7 µm, 10 µm, 12 µm, 14 µm, 15 µm, or the like.

Unless otherwise specified, the particle size distribution parameter DV₅₀ of the negative electrode active material determined from the particle size distribution measurement value in this application is determined by a particle size analyzer-laser diffraction method, and specifically, it may be measured by a Malvern laser particle size analyzer (model: Master Size 3000) according to instructions of the manufacturer with reference to the standard GB/T 19077-2016.

The volume distribution particle size DV₅₀ of the negative active substance layer is ≤15µm, the volume distribution particle size of the negative active material is relatively small, and the negative active material has more active reaction sites and can receive ions more quickly, thereby improving the charging efficiency of the battery cell 20 and improving the fast charging capability of the battery cell 20.

In some embodiments, the negative plate 232 includes a negative electrode active substance layer, and the negative electrode active substance layer includes a negative active substance material, a binder, and a conductive agent.

The coating weight per unit area of the negative electrode active substance layer is less than or equal to 150 mg/1540.25 mm².

Exemplarily, a sample coated with the negative electrode active substance layer 11b on only one side is cut out from the negative plate 232, and the sample is a 1540.25 mm² wafer. The weight G₁ of the sample is measured, with a unit of mg. Then, the negative electrode active substance layer of the sample is removed, and the remaining negative electrode current collector is weighed to obtain a weight G₂, with a unit of mg. The coating weight per unit area of the negative electrode active substance layer may be G₁-G₂.

The coating weight per unit area of the negative electrode active substance layer may be 140 mg/1540.25 mm², 130 mg/1540.25 mm², 120 mg/1540.25 mm², 110 mg/1540.25 mm², 100 mg/1540.25 mm², or the like.

The coating weight per unit area of the negative electrode active substance layer is less than or equal to 150 mg/1540.25 mm², the coating weight per unit area of the negative electrode active substance layer is small, and the negative electrode active substance layer can have a smaller thickness, thereby reducing the resistance of ions to be intercalated into the negative electrode active substance layer during charging and improving the charging efficiency of the battery cell 20. The thinner negative plate 232 may also increase the number of winding layers of the negative plate 232, and thus more negative tab portions 2711 may be disposed, which is beneficial to improving the negative electrode current-carrying capability and is also beneficial to the fast charging of the battery cell 20.

In some embodiments, the battery cell 20 further includes an electrolyte, and ionic conductivity of the electrolyte is 9 mS/cm to 16 mS/cm.

The electrolyte includes a low-viscosity solvent, so that the resistance to ion migration is reduced, which is beneficial to improving the conductivity of the electrolyte.

According to the embodiment of this application, the conductivity of the electrolyte may be tested by a conductivity meter with reference to the standard HG/T 4067-2015, and specifically, the resistance of the electrolyte may be tested at a constant temperature of 25±0.1°C and an alternating current impedance of 1 kHz, thereby the conductivity of the electrolyte is calculated.

The ionic conductivity of the electrolyte may be 9 mS/cm, 10 mS/cm, 11 mS/cm, 11.5 mS/cm, 12 mS/cm, 13 mS/cm, 14 mS/cm, 15 mS/cm, 16 mS/cm, or the like.

The ionic conductivity of the electrolyte is 9 mS/cm to 16 mS/cm, so that the impedance of the battery cell 20 is smaller, the ions migrate faster between the positive plate 231 and the negative plate 232, and the charging rate of the battery cell 20 is faster, which is beneficial to forming the fast charging battery 100.

In some embodiments, the direct current resistance (DCR) of the battery cell 20 is less than or equal to 0.4 milliohm.

The impedance of the battery cell 20 refers to resistance that the current receives while passing through the battery cell 20. A method for measuring the impedance of the battery cell 20 is as follows:
a) At room temperature, a target battery cell 20 is adjusted to 50% SOC with a current of 0.33 Cn, where the battery cell 20 has a capacity of Wn;
b) After being adjusted to 50% SOC, the battery cell is left for 60 min;
c) The test sample is discharged at a current of 4 Cn for 30s, and the voltage V₀ of the battery cell 20 before discharge and the voltage V₁ of the battery cell before discharge 10 are extracted; and
D) Through calculation, DCR=(V₀-V₁)/4Cn may be obtained.

The DC impedance of the battery cell 20 may be 0.1 milliohm, 0.15 milliohm, 0.2 milliohm, 0.25 milliohm, 0.3 milliohm, 0.35 milliohm, 0.4 milliohm, or the like.

The DC impedance of the battery cell 20 is less than or equal to 0.4 milliohm, and the battery cell 20 has relatively small DC impedance, thereby improving the migration rate of ions, improving the charging efficiency of the battery cell 20, and improving the fast charging capability of the battery cell 20.

An embodiment of this application further provides a battery 100, where the battery 100 includes the battery cell 20 provided in any one of the above embodiments.

The battery cell 20 provided in any one of the above embodiments has relatively good reliability, and a battery 100 including the battery cell 20 also has relatively good reliability.

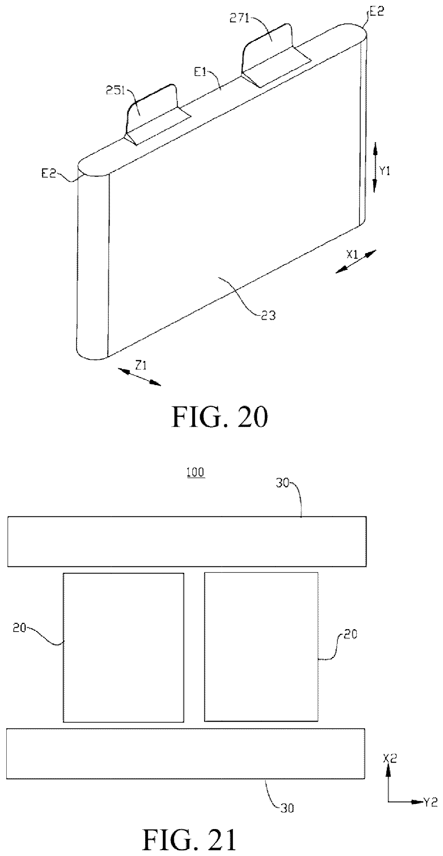

As shown in FIG. 21, in some embodiments, the battery 100 further includes a plurality of thermal management components 30 arranged in a first direction X₂, each of the thermal management components 30 is configured to adjust a temperature of the battery cell 20, a plurality of battery cells 20 arranged in a second direction Y₂ are disposed between two adjacent thermal management components, and the first direction X₂ is perpendicular to the second direction Y₂.

Each of the thermal management components 30 may reduce the temperature of the battery cell 20, or may increase the temperature of the battery cell 20. Each of the thermal management components 30 may be a plate-shaped structure in which a flow channel for accommodating a heat exchange medium is formed, the heat exchange medium in the flow channel may be water, air, a mixed solution of water and ethylene glycol, a refrigerant, a phase change material, or the like, and the heat exchange medium may flow circularly. In some other embodiments, the heat exchange medium may also be a solid, such as paraffin, and the heat exchange function can be realized by the change of the state of the heat exchange medium, for example, when the paraffin changes from a solid state to a liquid state, heat can be absorbed, so as to achieve the effect of cooling the battery cell 20. Each of the heat management members 30 may be referred to as a water-cooling plate, a liquid-cooling plate, a heat exchange plate, a temperature adjustment plate, or the like.

The arrangement direction of the thermal management components 30 is perpendicular to the arrangement direction of the battery cells 20, so that one thermal management component 30 can synchronously exchange heat with a plurality of battery cells 20, thereby improving temperature regulating efficiency.

In some embodiments, each of the thermal management components 30 is adhesively connected to the outer surface of the battery cell 20.

For example, each of the thermal management components 30 may be adhesively connected to the outer surface of the battery cell 20 by coating an adhesive on the surface of each of the thermal management components 30 facing the battery cell 20 and the surface of the battery cell 20 facing each of the thermal management components 30. The adhesive disposed between each of the thermal management components 30 and the battery cell 20 may be a thermally conductive adhesive, so as to improve the thermal conduction performance between each of the thermal management components 30 and the battery cell 20.

Each of the thermal management components 30 is adhesively connected to the outer surface of the battery cell 20, so that each of the thermal management components 30 and the battery cell 20 have a stable relative position relationship, which is beneficial to improving the heat exchange efficiency.

An embodiment of this application provides an electric device, comprising the battery cell 20 provided in any one of the above embodiments.

The battery cell 20 provided in any one of the above embodiments has relatively good reliability, which is beneficial to improving the electric reliability of electricity supply by using the battery cell 20.

An embodiment of this application provides a battery cell 20, where the battery cell 20 includes an electrode assembly 23, a positive electrode lead-out portion 24, a positive electrode connecting assembly 25, a negative electrode lead-out portion 26, and a negative electrode connecting assembly 27; the electrode assembly 23 includes a positive plate 231 and a negative plate 232; the positive electrode connecting assembly 25 is electrically connected to the positive plate 231 and the positive electrode lead-out portion 24, and the positive electrode lead-out portion 24 is configured to be electrically connected to a component outside the battery cell 20; the negative electrode connecting assembly 27 is electrically connected to the negative plate 232 and the negative electrode lead-out portion 26, and the negative electrode lead-out portion 26 is configured to be electrically connected to the component outside the battery cell 20; and the positive electrode connecting assembly 25 is a positive tab 251, and the positive tab 251 is welded to the positive electrode lead-out portion 24. A fusing region is formed on the positive tab 251. The negative electrode connecting assembly 27 is a negative tab 271, and the negative tab 271 is welded to the negative electrode lead-out portion 26. A current-carrying cross-sectional area of the fusing region is smaller than a current-carrying cross-sectional area of the positive electrode lead-out portion 24, a current-carrying cross-sectional area of the positive electrode lead-out portion 24 is smaller than a current-carrying cross-sectional area of the negative tab 271, and a current-carrying cross-sectional area of the negative tab 271 is smaller than a current-carrying cross-sectional area of the negative electrode lead-out portion 26. The current-carrying cross-sectional area of the fusing region is A₁, with a unit of mm², the minimum current-carrying cross-sectional area of the negative electrode connecting assembly 27 is A₂, with a unit of mm², a melting point of the positive electrode connecting assembly 25 is B₁, with a unit of °C, a melting point of the negative electrode connecting assembly 27 is B₂, with a unit of °C, resistivity of the positive electrode connecting assembly 25 is C₁, with a unit of Ωm, and resistivity of the negative electrode connecting assembly 27 is C₂, with a unit of Ωm, A₁<A₂*(B₂/B₁)*(C₁/C₂) being satisfied.

An embodiment of this application provides a battery cell 20, where the battery cell 20 includes an electrode assembly 23, a positive electrode lead-out portion 24, a positive electrode connecting assembly 25, a negative electrode lead-out portion 26, and a negative electrode connecting assembly 27; the electrode assembly 23 includes a positive plate 231 and a negative plate 232; the positive electrode connecting assembly 25 is electrically connected to the positive plate 231 and the positive electrode lead-out portion 24, and the positive electrode lead-out portion 24 is configured to be electrically connected to a component outside the battery cell 20; the negative electrode connecting assembly 27 is electrically connected to the negative plate 232 and the negative electrode lead-out portion 26, and the negative electrode lead-out portion 26 is configured to be electrically connected to the component outside the battery cell 20; and the positive electrode connecting assembly 25 includes a positive tab 251 and a positive electrode adapter 252, where the positive tab 251 is connected to the positive electrode adapter 252 through the positive electrode lead-out portion 24. A fusing region is formed on the positive electrode adapter 252. The negative electrode connecting assembly 27 includes a negative tab 271 and a negative electrode adapter 272, and the negative tab is connected to the negative electrode lead-out portion 26 through the negative electrode adapter 272. A current-carrying cross-sectional area of the fusing region is smaller than a current-carrying cross-sectional area of the positive tab 251, a current-carrying cross-sectional area of the positive tab 251 is smaller than a current-carrying cross-sectional area of the positive electrode lead-out portion 24, a current-carrying cross-sectional area of the positive electrode lead-out portion 24 is smaller than a current-carrying cross-sectional area of the negative tab 271, a current-carrying cross-sectional area of the negative tab 271 is smaller than a current-carrying cross-sectional area of the negative electrode adapter 272, and a current-carrying cross-sectional area of the negative electrode adapter 272 is smaller than a current-carrying cross-sectional area of the negative electrode lead-out portion 26. The current-carrying cross-sectional area of the fusing region is A₁, with a unit of mm², the minimum current-carrying cross-sectional area of the negative electrode connecting assembly 27 is A₂, with a unit of mm², a melting point of the positive electrode connecting assembly 25 is B₁, with a unit of °C, a melting point of the negative electrode connecting assembly 27 is B₂, with a unit of °C, resistivity of the positive electrode connecting assembly 25 is C₁, with a unit of Ωm, and resistivity of the negative electrode connecting assembly 27 is C₂, with a unit of Ωm, A₁<A₂*(B₂/B₁)*(C₁/C₂) being satisfied.

The foregoing descriptions are merely preferred embodiments of this application, and are not intended to limit this application. For a person skilled in the art, various modifications and changes may be made in this application. Any modification, equivalent replacement, or improvement made without departing from the spirit and principle of this application shall fall within the protection scope of this application.

## Claims

1. A battery cell, comprising:
an electrode assembly, comprising a positive plate and a negative plate;
a positive electrode lead-out portion and a positive electrode connecting assembly, wherein the positive electrode connecting assembly is electrically connected to the positive plate and the positive electrode lead-out portion, and the positive electrode lead-out portion is configured to be electrically connected to a component outside the battery cell;
a negative electrode lead-out portion and a negative electrode connecting assembly, wherein the negative electrode connecting assembly is electrically connected to the negative plate and the negative electrode lead-out portion, and the negative electrode lead-out portion is configured to be electrically connected to the component outside the battery cell;
a minimum current-carrying cross-sectional area of the positive electrode connecting assembly is smaller than a current-carrying cross-sectional area of the positive electrode lead-out portion, a melting point of the positive electrode connecting assembly is smaller than a melting point of the negative electrode connecting assembly, and the minimum current-carrying cross-sectional area of the positive electrode connecting assembly is A₁, with a unit of mm²; the minimum current-carrying cross-sectional area of the negative electrode connecting assembly is A₂, with a unit of mm²; the melting point of the positive electrode connecting assembly is B₁, with a unit of °C, and the melting point of the negative electrode connecting assembly is B₂, with a unit of °C; resistivity of the positive electrode connecting assembly is C₁, with a unit of Ωm; and resistivity of the negative electrode connecting assembly is C₂, with a unit of Ωm, A₁<A₂*(B₂/B₁)*(C₁/C₂) being satisfied.

2. The battery cell according to claim 1, wherein A₁≤2.5A₂.

3. The battery cell according to claim 2, wherein A₁≤2.3A₂.

4. The battery cell according to claim 3, wherein A₁≤1.5A₂.

5. The battery cell according to claim 4, wherein A₁<A₂.

6. The battery cell according to any one of claims 1 to 5, wherein a positive tab comprises a plurality of positive tab portions that are stacked, the negative electrode connecting assembly comprises a negative tab, the negative tab is connected to the negative plate, and the negative tab comprises a plurality of negative tab portions that are stacked; and
the number of the positive tab portions is less than the number of the negative tab portions.

7. The battery cell according to any one of claims 1 to 6, wherein the negative electrode connecting assembly comprises a negative tab, the negative tab is connected to the negative plate, and a width of the positive tab is less than a width of the negative tab.

8. The battery cell according to any one of claims 1 to 7, wherein the positive electrode connecting assembly comprises a positive tab, the positive tab is connected to the positive plate, and the minimum current-carrying cross-sectional area of the positive tab is smaller than the current-carrying cross-sectional area of the positive electrode lead-out portion.

9. The battery cell according to claim 8, wherein a rated capacity of the battery cell is W, with a unit of Ah, A₁/W≥0.15 being satisfied.

10. The battery cell according to claim 8 or 9, wherein the positive tab is connected to the positive electrode lead-out portion.

11. The battery cell according to claim 8 or 9, wherein the positive electrode connecting assembly further comprises a positive electrode adapter, the positive electrode adapter is connected to the positive tab and the positive electrode lead-out portion, the positive electrode adapter comprises a first welding region, a second welding region, and a transition connecting portion, the first welding region is connected to the positive tab, the second welding region is connected to the positive electrode lead-out portion, and the transition connecting portion is connected between the first welding region and the second welding region;
a cross-sectional area of the transition connecting portion is larger than or equal to a minimum cross-sectional area of the first welding region, and/or
a cross-sectional area of the transition connecting portion is larger than or equal to a minimum cross-sectional area of the second welding region.

12. The battery cell according to any one of claims 1 to 7, wherein the positive electrode connecting assembly further comprises a positive electrode adapter and a positive tab, the positive tab is connected to the positive plate, the positive electrode adapter is connected to the positive tab and the positive electrode lead-out portion, a minimum current cross-sectional area of the positive electrode adapter is smaller than a current cross-sectional area of the positive electrode lead-out portion, and the minimum current cross-sectional area of the positive electrode adapter is smaller than a current cross-sectional area of the positive tab.

13. The battery cell according to claim 12, wherein the positive electrode adapter comprises a first welding region, a second welding region, and a transition connecting portion, the first welding region is connected to the positive tab, the second welding region is connected to the positive electrode lead-out portion, and the transition connecting portion is connected between the first welding region and the second welding region;
a cross-sectional area of the transition connecting portion is larger than or equal to a minimum cross-sectional area of the first welding region, and/or
a cross-sectional area of the transition connecting portion is larger than or equal to a minimum cross-sectional area of the second welding region.

14. The battery cell according to claim 12 or 13, wherein a rated capacity of the battery cell is W, with a unit of Ah, A₁/W≥0.2 being satisfied.

15. The battery cell according to any one of claims 12 to 14, wherein a thickness of at least a part of the positive electrode adapter is H₁, 1.0mm≤H₁≤1.5mm being satisfied.

16. The battery cell according to claim 14 or 15, wherein the positive electrode adapter comprises a first connecting portion and a second connecting portion, the first connecting portion is connected to the positive tab, the second connecting portion is connected to the positive electrode lead-out portion, a thickness of the first connecting portion is greater than or equal to a thickness of the second connecting portion, and the thickness of the first connecting portion is H₁, 1.0 mm≤H₁≤1.5 mm being satisfied.

17. The battery cell according to any one of claims 12 to 16, wherein a material of the positive tab is aluminum; and/or a material of the positive electrode adapter is aluminum.

18. The battery cell according to any one of claims 1 to 17, wherein the negative electrode connecting assembly further comprises a negative electrode adapter and a negative tab, the negative tab is connected to the negative plate, and the negative electrode adapter is connected to the negative tab and the negative electrode lead-out portion.

19. The battery cell according to claim 18, wherein a minimum cross-sectional area of the negative electrode adapter is larger than a maximum cross-sectional area of the negative tab; or, a minimum cross-sectional area of the negative tab is larger than a maximum cross-sectional area of the negative electrode adapter.

20. The battery cell according to claim 18 or 19, wherein a thickness of at least a part of the negative electrode adapter is H₂, 0.6 mm≤H₂≤1.0 mm being satisfied.

21. The battery cell according to claim 20, wherein the negative electrode adapter comprises a third connecting portion and a fourth connecting portion, the third connecting portion is connected to the negative tab, the fourth connecting portion is connected to the negative electrode lead-out portion, a thickness of the third connecting portion is greater than or equal to a thickness of the fourth connecting portion, and the thickness of the third connecting portion is H₂, 0.6 mm≤H₂≤1.0 mm being satisfied.

22. The battery cell according to any one of claims 18 to 21, wherein a minimum current-carrying cross-sectional area of the positive electrode connecting assembly is smaller than a minimum current-carrying cross-sectional area of the negative tab.

23. The battery cell according to claim 18, wherein a material of the negative tab is copper; and/or a material of the negative electrode adapter is copper.

24. The battery cell according to any one of claims 1 to 23, wherein a current-carrying cross-sectional area of the negative electrode connecting assembly is smaller than a flow passage cross-sectional area of the negative electrode lead-out portion.

25. The battery cell according to any one of claims 1 to 24, wherein an average charge rate of the battery cell is K, K≥2 being satisfied.

26. The battery cell according to any one of claims 1 to 25, wherein the positive electrode connecting assembly comprises a positive tab, the positive tab comprises a plurality of positive tab portions that are stacked, and the negative electrode connecting assembly comprises a negative tab, and the negative tab comprises a plurality of negative tab portions that are stacked;
the electrode assembly is a wound electrode assembly, the number of the negative tab portions of the electrode assembly is M₁, the number of layers of the negative plate along a stacking direction of the plurality of tab portions is M₂, 1/2≤M₁/M₂≤1 being satisfied; and/or the number of the positive tab portions of the electrode assembly is N₁, and the number of layers of the positive plate in the stacking direction of the plurality of positive tab portions is N₂, 1/2≤N₁/N₂≤1 being satisfied; and
optionally, 1/2<M₁/M₂≦3/4, 1/2≦N₁/N₂≤3/4.

27. The battery cell according to any one of claims 1 to 26, wherein the negative plate comprises a negative electrode active substance layer, and a specific surface area of particles of the negative electrode active substance layer is 0.5 m²/g to 5 m²/g.

28. The battery cell according to any one of claims 1 to 27, wherein the negative plate comprises a negative electrode active substance layer, and a volume distribution particle size D_{V}50 of the negative electrode active substance layer is ≤15 µm.

29. The battery cell according to any one of claims 1 to 28, wherein the negative plate comprises a negative electrode active substance layer, and a coating weight per unit area of the negative electrode active substance layer is less than or equal to 150 mg/1540.25 mm².

30. The battery cell according to any one of claims 1 to 29, wherein the battery cell further comprises an electrolyte, and ionic conductivity of the electrolyte is 9 mS/cm to 16 mS/cm.

31. The battery cell according to any one of claims 1 to 30, wherein direct current impedance of the battery cell is less than or equal to 0.4 milliohm.

32. A battery, comprising the battery cell according to any one of claims 1 to 31.

33. The battery according to claim 32, wherein the battery further comprises a plurality of thermal management components arranged along a first direction, each of the thermal management components is configured to adjust a temperature of the battery cell, the plurality of battery cells arranged along a second direction are disposed between two adjacent thermal management components, and the first direction is perpendicular to the second direction.

34. The battery according to claim 33, wherein each of the thermal management components is adhesively connected to an outer surface of the battery cell.

35. An electric device, comprising the battery cell according to any one of claims 1 to 34.
